# EUROPEAN PATENT SPECIFICATION

(11) **EP 3 462 102 B1**
(45) Date of publication and mention of the grant of the patent: **03.08.2022**
(21) Application number: 17193809.5
(22) Date of filing: 28.09.2017
(51) Int. Cl.: F24H 1/18, F24H 4/04, F24H 9/02, B29C 44/12, B29C 44/18, B29L 31/00

(54) **HOT-WATER SUPPLY UNIT AND METHOD FOR MANUFACTURING THE SAME**
HEISSWASSERVERSORGUNGSEINHEIT UND VERFAHREN ZUR HERSTELLUNG DERGLEICHEN
UNITÉ D'ALIMENTATION EN EAU CHAUDE ET PROCÉDÉ DE FABRICATION DE CELUI-CI

(43) Date of publication of application: 03.04.2019
(73) Proprietor: DAIKIN INDUSTRIES, LTD., Osaka-shi, Osaka 530-8323 (JP); Daikin Europe N.V., 8400 Oostende (BE)
(72) Inventor: YOSHIKAWA, Kota, 8400 Oostende (BE); BRYSSE, Joris, 8400 Oostende (BE)
(74) Representative: Global IP Europe Patentanwaltskanzlei

(56) References cited:
- DE-A1- 3 408 856
- DE-A1- 4 416 487
- DE-A1-102008 042 995
- DE-U1- 8 807 394
- DE-U1- 9 416 996
- DE-U1-202009 007 221
- DE-U1-202014 002 656

## Description

### Field of the Invention

The present invention relates to a hot-water supply unit having a heating mechanism for heating up water and a tank for storing the water.

### Background

Hot-water supply units having a heating mechanism for heating up water and a tank for storing the water are widely used in space heating systems, hot-water supply systems or the like. EP 2 330 360 A1 discloses to dispose the heating mechanism above the tank. With this arrangement structure, the hot-water supply unit can be designed narrow, and the maintenance performance of the heating mechanism can be facilitated.

The tank needs thermal insulation to improve heat efficiency of the unit. On this point, EP 2 280 253 A1 discloses to fill a space between a tank and an outer shell surrounding the tank with polyurethane foam as a thermal insulator. Thus, it may be considered to apply this thermal insulator to the hot-water supply unit with the vertical arrangement structure mentioned above. By this, it is possible to improve both design and performance of the hot-water supply unit.

By the way, the hot-water supply unit is usually transported to its installation place after being almost completely assembled in factories or the like. As such, the housing of the hot-water supply unit tends to get scratches and dents during the transportation to cause disfigurement of the hot-water supply unit. If the damaged housing is exchanged with a new housing without damaging other elements accommodated in the housing, the appearance of the hot-water supply unit can be refreshed to as original while maintaining the original performance of the hot-water supply unit.

However, with the configuration disclosed in EP 2 280 253 A1, the outer shell is apparently undetachable from the polyurethane foam. If the outer shell is removed by force, at least the outer surface of the polyurethane foam adhering to the outer shell will come off to deteriorate the thermal insulation performance of the tank.

DE 20 2014 002656 U1 is the basis for the formulation of the two-part form.

### Summary

The object of the present invention is to provide a hot-water supply unit the housing of which can be easily exchanged.

A first aspect of the present invention provides a hot-water supply unit comprising the features of claim 1.

In other words, an outside plate of the housing is not fixed to the thermal insulator. This configuration enables easy exchange of the outside plate of the a hot-water supply unit without lowering the performance of the hot-water supply unit due to damaging the thermal insulator. Thereby, it is less likely that the whole hot-water supply unit should be replaced with a new hot-water supply unit. It reduces cost burden of the manufacture or installer of the hot-water supply unit.

Note that, the other part of the water circuit is not included in the hot-water supply unit. The water circuit is configured to configured to supply and/or circulate water from the tank to the hot-water destination, such as a heating unit or a faucet. The phrase "fixed only to the main frame among the thermal insulator and the main frame" means the side plate may be in contact with the thermal insulator, but is not fixed to the thermal insulator. The phrase "is fixed" may include not only being fastened but also simply being hanged, hooked, stuck or the like. The side plate may be directly fixed to the main frame, while not directly fixed to the thermal insulator.

According to a preferred embodiment of the hot-water supply unit mentioned above, the housing further has a bottom plate configured to support the thermal insulator with respect to an installation surface on which the hot-water supply unit is installed.

With the above configuration, the position of the tank and the thermal insulator is stabilized on the installation surface.

According to another preferred embodiment of any one of the hot-water supply units mentioned above, the hot-water supply unit further comprises a support plate which is accommodated by the housing and disposed between the thermal insulator and the main frame to support the main frame with respect to the thermal insulator.

With the above configuration, the main frame is stabilized at a position above the tank and the thermal insulator.

According to another preferred embodiment of any one of the hot-water supply units mentioned above, the at least one side plate is further fixed to the bottom plate.

With the above configuration, the side plate is fixed by the main frame and the bottom plate, and thus the position of the side plate is stabilized more securely without being fixed to the thermal insulator.

According to another preferred embodiment of any one of the hot-water supply units mentioned above, the bottom plate has a rectangular-like shape; and the housing has a right prism form with four side plates which are fixed only to the bottom plate and the main frame among the bottom plate, the tank, the thermal insulator, the support plate and the main frame.

With the above configuration, since the outline is substantially cuboid, not only the appearance but also the installation property of the hot-water supply unit can be improved without lowering the performance of the hot-water supply unit. Here, two or more of the four side plates may be integrated as a single unit. There may be a tolerance formed between the outer surface of the thermal insulator and the inner surface of the four side plates. In the case where the support plate is arranged in the hot-water supply unit, the tolerance may be continuously formed from the bottom plate till the support plate.

According to another preferred embodiment of any one of the hot-water supply units mentioned above, the thermal insulator has a casting surface at least in an area closest to the at least one side plate.

In other words, the thermal insulator is configured not to adhere to the side plate. The side plate is removably fixed to the main frame such that the casting surface is exposed when the side plate is removed from the main frame. With this configuration, it is avoided that the side plate damages the thermal insulator.

According to another preferred embodiment of any one of the hot-water supply units mentioned above, the thermal insulator is made of a foam filler and adhered to the tank, the bottom plate and the support plate by foaming process of the foam filler.

In other words, the tank, the bottom plate of the housing and the support plate are firmly connected by the thermal insulator. The combination becomes a column to support the entire structure of the hot-water supply unit and enables the main frame to hold the side plate. It should be noted that the thermal insulator is adhered to the tank, the bottom plate of the housing, and the support plate without adhering to the side plate of the housing. Thus, the hot-water supply unit can be easily assembled, and an easy fixing of the side plates can be secured.

The thermal insulator may be formed by foaming and drying a foam filler in a space defined by the tank, the support plate, the bottom plate, and at least one die accommodating the tank. Preferably, the foam filler contains urethane. The foam filler such as urethane which is hard enough to support the main frame and the entire structure of the hot-water supply unit as a kind of a column may be used.

According to another preferred embodiment of any one of the hot-water supply units mentioned above, the tank has a side face forming a cylindrical shape, a bottom face and a top face closing the cylindrical shape formed by the side face.

With the above configuration, the tank has a tubular shape.

According to another preferred embodiment of any one of the hot-water supply units mentioned above, the thermal insulator has a ring-shaped cross section with respect to a principal axis of the tank, the outline of the ring-shaped cross section having at least two straight edges respectively facing to two different side plates of the housing.

With the above configuration, the volume within the housing can be minimised to accommodate the thermal insulator. Thereby, the size of the housing, in particular, the area size for installing the hot-water supply unit can be minimised. Preferably, the two different side plates are opposite to each other. Furthermore preferably, the outline of the ring-shaped cross section has four straight edges each of which faces to each of four side plates, respectively.

According to another preferred embodiment of any one of the hot-water supply units mentioned above, the outline of the ring-shaped cross section of the thermal insulator has a shape such that four corner spaces are formed between the inner surface of the housing and the outer surface of the thermal insulator at each corner of the housing, and that each corner space is formed from the bottom plate till the support plate.

With the above configuration, the amount of foam filler and the time to foam can be reduced. Preferably, the outline of the ring-shaped cross section of the thermal insulator has four straight edges and four sub-edges, the four sub-edges are straight or curved. Each of the four sub-edges connects two among the four straight edges. For example, the outline of such a ring-shaped cross section has an octagonal-like shape.

According to another preferred embodiment of any one of the hot-water supply units mentioned above, the main frame defines at least one frame edge, the at least one side plate being hanged on the frame edge.

With the above configuration, the side plate can be detached from and attached to the main frame.

A second aspect of the present invention provides a method for manufacturing a hot-water supply unit comprising the features of claim 14.

In other words, an outside plate of the housing is not fixed to the thermal insulator. As a result, a configuration which enables easy exchange of the outside plate of the a hot-water supply unit without lowering the performance of the hot-water supply unit due to damaging the thermal insulator is obtained. Thereby, it is less likely that the whole hot-water supply unit should be replaced with a new hot-water supply unit. It reduces cost burden of the manufacture or installer of the hot-water supply unit.

Note that, the other part of the water circuit is not included in the hot-water supply unit. The water circuit is configured to configured to supply and/or circulate water from the tank to the hot-water destination, such as a heating unit or a faucet.

According to a preferred embodiment of the method mentioned above, the housing further has a bottom plate configured to support the thermal insulator with respect to an installation surface; the hot-water supply unit further comprises a support plate which is accommodated by the housing and disposed between the thermal insulator and the main frame to support the main frame with respect to the thermal insulator; the thermal insulator is adhering to the outer surface of the tank, the bottom plate and the support plate; and the space is defined by the tank, the bottom plate, the at least one of die, and the support plate.

By this, the tank, the bottom plate of the housing and the support plate are firmly connected by the thermal insulator. The combination becomes a column to support the entire structure of the hot-water supply unit and enables the main frame to hold the side plate. It should be noted that the thermal insulator is adhered to the tank, the bottom plate of the housing, and the support plate without adhering to the side plate of the housing. Thus, the hot-water supply unit can be easily assembled, and an easy fixing of the side plates can be secured. Preferably, the foam filler contains urethane. The foam filler such as urethane which is hard enough to support the main frame and the entire structure of the hot-water supply unit as a kind of a column may be used.

According to another preferred embodiment of any one of the methods mentioned above, the bottom plate has a rectangular-like shape; and the housing has a right prism form with four side plates which are fixed only to the bottom plate and the main frame among the bottom plate, the tank, the thermal insulator, the support plate and the main frame.

By this, as the outline is substantially cuboid, not only the appearance but also the installation property of the hot-water supply unit can be improved without lowering the performance of the hot-water supply unit. Here, two or more of the four side plates may be integrated as a single unit. There may be a tolerance formed between the outer surface of the thermal insulator and the inner surface of the four side plates. In the case where the support plate is arranged in the hot-water supply unit, the tolerance may be continuously formed from the bottom plate till the support plate.

According to another preferred embodiment of any one of the methods mentioned above, the method further comprises: arranging the main frame, the heating mechanism, and the at least one water pipe on the support plate that is fixed to the thermal insulator; and assembling the hot-water supply unit by fixing the four side plates only to the bottom plate and the main frame among the bottom plate, the tank, the thermal insulator, the support plate and the main frame.

In other words, the main frame, the heating mechanism, the water pipe and the four side plates are assembled after combining the bottom plate, the tank and the support plate by the thermal insulator. Thus, it is possible to facilitates production of the hot-water supply unit the housing of which can be easily exchanged without lowering the performance of the hot-water supply unit in the case where the housing is damaged, for instance.

### Brief Description of the Drawings

Fig. 1 is a top front perspective view of a hot-water supply unit according to an embodiment of the present invention.
Fig. 2 is a bottom rear perspective view of the hot-water supply unit according to the present embodiment.
Fig. 3 is a front plan view of the hot-water supply unit in a use state according to the present embodiment, with four side plates removed.
Fig. 4 is a vertical cross sectional view of the hot-water supply unit according to the present embodiment.
Fig. 5 is a horizontal cross sectional view of the hot-water supply unit according to the present embodiment.
Fig. 6 is a perspective view of a tank along with a bottom plate, according to the present embodiment.
Fig. 7 is a perspective view of a thermal insulator along with the bottom plate, the tank and a support plate, according to the present embodiment
Fig. 8 is a top perspective view of the support plate according to the present embodiment.
Fig. 9 is a bottom perspective view of the support plate according to the present embodiment.
Fig. 10 is an enlarged vertical cross sectional view of the support plate and a peripheral part thereof, according to the present embodiment.
Fig. 11 is a perspective view of a unit main body according to the present embodiment.
Fig. 12 is a rear perspective view of a main frame along with the support plate and a rear upper plate, according to the present embodiment.
Fig. 13 is a perspective view of a right side plate in a detached state, according to the present embodiment.
Fig. 14 is a perspective cross sectional view of a right hanging plate and a peripheral part thereof, according to the present embodiment.
Fig. 15 is a perspective view of a pipe receiver according to the present embodiment.
Fig. 16 is a top plan view of the pipe receiver according to the present embodiment.
Fig. 17 is a front plan view of the pipe receiver according to the present embodiment.
Fig. 18 is a perspective view of a pipe retainer along with a unit pipe port, according to the present embodiment.
Fig. 19 is a perspective view of a top rear plate and a peripheral part thereof, according to the present embodiment.
Fig. 20 is a cross sectional view of the top rear plate and the peripheral part thereof, according to the present embodiment.
Fig. 21 is a flowchart of a manufacturing process of the hot-water supply unit according to the present embodiment.
Fig. 22 is a schematic view showing a state of a process of step S1400 of Fig. 21.
Fig. 23 is a top perspective view of the support plate according to one of variations of the present embodiment.
Fig. 24 is a bottom perspective view of the support plate according to the variation of the present embodiment.

### Detailed Description of Preferred Embodiment

A preferred embodiment of a hot-water supply unit according to the present invention will be described with reference to the drawings.

### Outline of Hot-Water Supply Unit

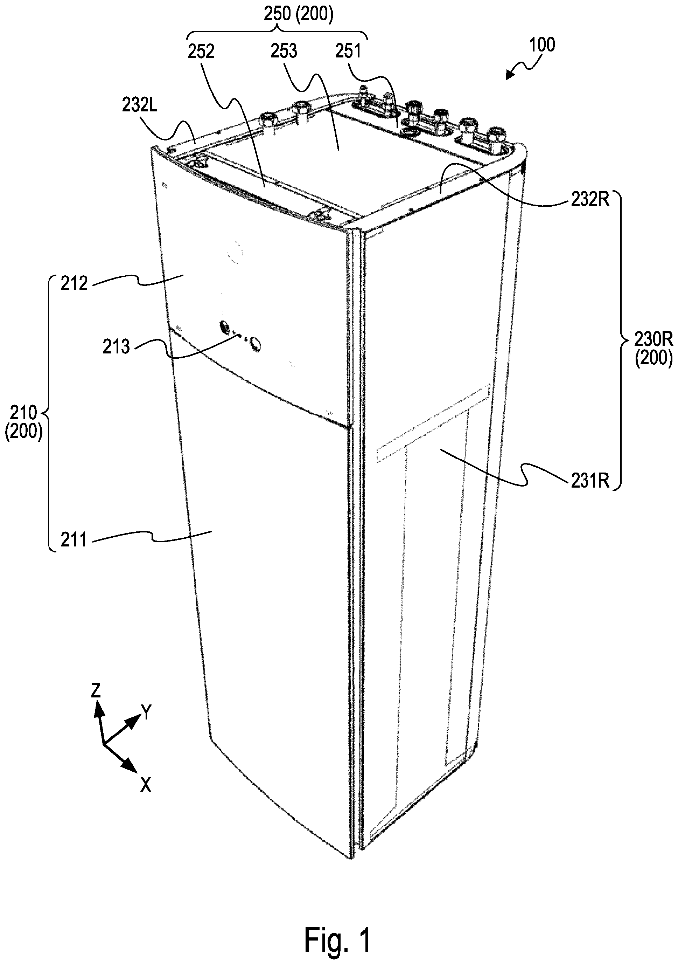

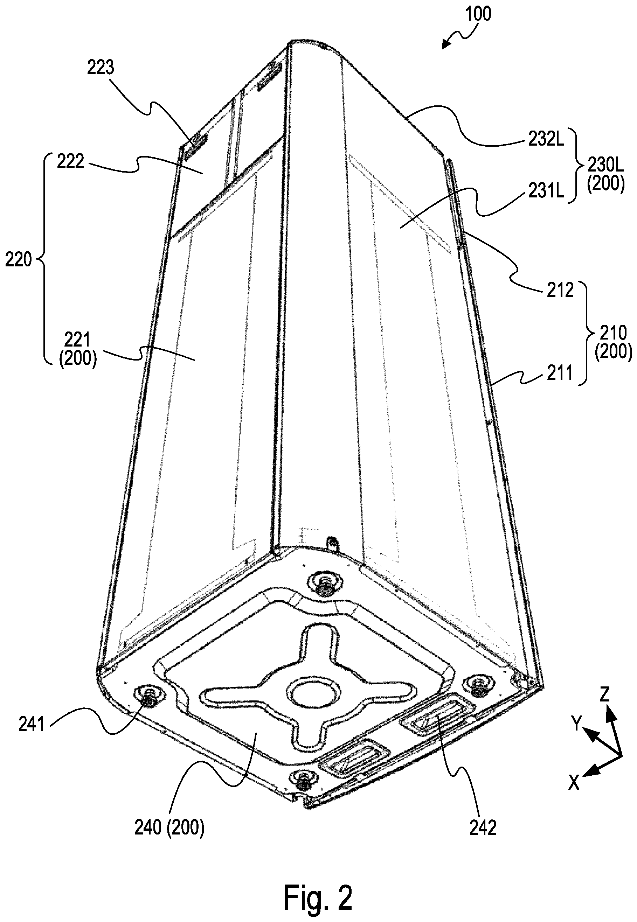

Fig. 1 is a top front perspective view of a hot-water supply unit according to the present embodiment. Fig. 2 is a bottom rear perspective view of the hot-water supply unit.

The hot-water supply unit 100 constitutes both a part of a heat pump system and a part of a hot-water supply system for domestic water, for instance. The hot-water supply unit 100 is configured to generate hot water to be used in the hot-water supply system by transferring heat supplied from the heat pump system to water. The hot-water supply system includes a hot-water destination, such as a floor heater and a faucet, and configured to supply the generated hot water to the hot-water destination.

The hot-water supply unit 100 has a housing 200 which accommodates most of the rest part of the hot-water supply unit 100. The housing 200 preferably has a right prism form such as a substantially cuboid shape shown in Figs. 1 and 2. The housing 200 includes a front side plate 210, a rear side plate 220, a right side plate 230R, and a left side plate 230L. The housing 200 preferably further includes a bottom plate 240 and a top plate 250. Each of the front side plate 210, the rear side plate 220, the right side plate 230R and the left side plate 230L (hereinafter referred to as "the four side plates 210, 220, 230R, 230L") has a substantially flat shape. Each of the four side plates 210, 220, 230R, 230L is made from, for instance, a steel plate. Each of the four side plates 210, 220, 230R, 230L extends in a vertical direction in a use state of the hot-water supply unit 100 (hereinafter referred to as "the use state"). Each of the bottom plate 240 and the top plate 250 extends in a horizontal direction in the use state.

In this embodiment, the terms related to directions are interpreted as follows, unless otherwise specified. The terms indicating linear directions are the linear directions in a case where the hot-water supply unit 100 is in the use state and seen from a direction facing the front side plate 210. The right direction when seen from a direction facing the front side plate 210 may be set as an X-axis direction. The depth direction when seen from a direction facing the front side plate 210 may be set as a Y-axis direction. The upward vertical direction when seen from a direction facing the front side plate 210 may be set as a Z-axis direction.

The front side plate 210 is arranged on the front side of the hot-water supply unit 100. The front side plate 210 preferably has a slightly curved shape curved in a horizontal direction. The front side plate 210 includes a front lower plate 211 and a front upper plate 212 which are continuously arranged flush with each other. The front upper plate 212 is arranged above the front lower plate 211. The hot-water supply unit 100 has a user interface 213 arranged in the front upper plate 212.

The rear side plate 220 is arranged on the opposite side of the hot-water supply unit 100 to the front side plate 210 in the depth direction, i.e. on the back side of the hot-water supply unit 100. In other words, the housing 200 has a first side face in which the user interface 213 is arranged and a second side face which is opposite to the first side face and on which the rear side plate 220 is arranged. The rear side plate 220 has substantially the same height and width as the height and width of the front side plate 210. The rear side plate 220 preferably has a slightly concave-convex shaped part. The rear side plate 220 is preferably provided with a plurality of upper concave handles 223 for placing hands near the upper end thereof. The rear side plate 220 includes a rear lower plate 221 and a rear upper plate 222 which are arranged flush with each other. The rear upper plate 222 is arranged above the rear lower plate 221.

The right side plate 230R is arranged on the right side of the hot-water supply unit 100. The right side plate 230R preferably connects the right side ends of the front side plate 210 and the rear side plate 220. The right side plate 230R includes a right main plate 231R and a right hanging plate 232R. The right main plate 231R has substantially the same height as the heights of the front side plate 210 and the rear side plate 220. The right main plate 231R preferably has a slightly concave-convex shaped part. The right hanging plate 232R is an elongate small plate with a length substantially the same as the length of the right main plate 231R in the depth direction. The right hanging plate 232R is fixed to the upper end of the right main plate 231R so as to horizontally extend therefrom towards the left side. The right hanging plate 232R is made of plastic, for instance.

The left side plate 230L is arranged on the left side of the hot-water supply unit 100. The left side plate 230L preferably connects the left side ends of the front side plate 210 and the rear side plate 220. The left side plate 230L includes a left main plate 231L and a left hanging plate 232L. The left side plate 230L and the right side plate 230R have a plane-symmetrical structure with respect to the X-Y plane at the centre of the housing 200. Thus, explanations of the detailed configuration of the right side plate 230R is applicable to the detailed configuration of the left side plate 230L.

The bottom plate 240 is arranged at the bottom of the hot-water supply unit 100. The bottom plate 240 has a rectangular-like shape with four main edges. More specifically, the bottom plate 240 preferably has an outer shape corresponding to the shape defined by the four side plates 210, 220, 230R, 230L in a top plan view. The four main edges of the bottom plate 240 are preferably connected to the lower ends of the four side plates 210, 220, 230R, 230L, respectively. The bottom plate 240 preferably has a slightly concave-convex shaped part. The bottom plate 240 is preferably provided with a plurality of legs 241 extending downward. The bottom plate 240 is preferably provided with a plurality of lower concave handles 242 for placing hands near the front edge.

The top plate 250 is arranged at the top of the hot-water supply unit 100. The top plate 250 has a rectangular-like shape with four main edges. More specifically, the top plate 250 preferably has an outer shape corresponding to the shape defined by the four side plates 210, 220, 230R, 230L in a top plan view. In the present embodiment, the top plate 250 has a corresponding shape to the outer shape of the bottom plate 240. The four main edges of the top plate 250 are preferably respectively connected to the upper ends of the four side plates 210, 220, 230R, 230L. The top plate 250 includes a top rear plate 251, a top front plate 252, and a top main plate 253 which are arranged flush with each other. The top rear plate 251 is arranged on the rear side, the top front plate 252 is arranged on the front side, and the top main plate 253 is arranged between the top rear plate 251 and the top front plate 252. However, some or all of the top rear plate 251, the top front plate 252, and the top main plate 253 may be integrated as a single plate.

The rear part of the right side plate 230R and the rear part of the left side plate 230L preferably curve towards each other. In this case, the width of the rear side plate 220 is slightly smaller than the width of the front side plate 210.

### Internal Configuration of Hot-Water Supply Unit

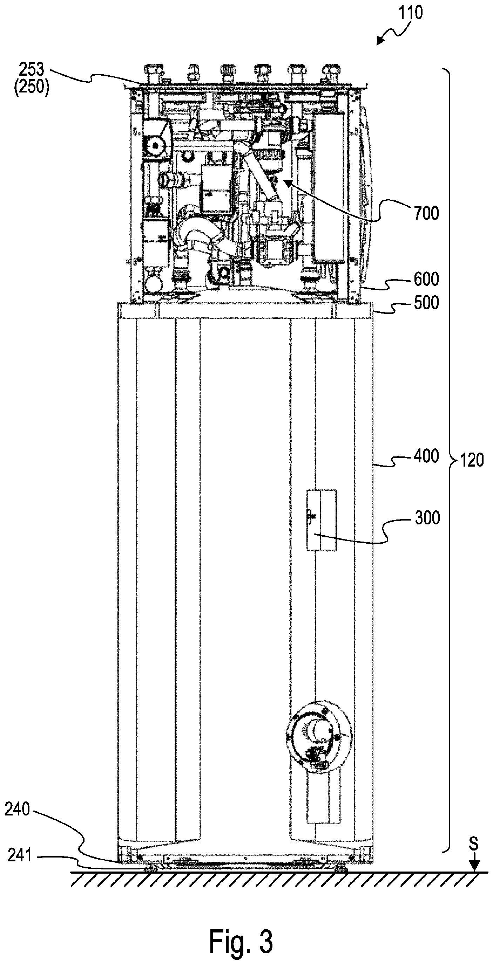

Fig. 3 is a front view of the hot-water supply unit in the use state, with the four side plates 210,220, 230R, 230L removed and some parts omitted.

Hereinafter, the part of the hot-water supply unit 100 other than the four side plates 210, 220, 230R, 230L is referred to as "the unit main body 110."

The unit main body 110 includes the bottom plate 240, the top plate 250 and an internal unit 120. The internal unit 120 is arranged substantially between the bottom plate 240 and the top plate 250. In other words, the internal unit 120 is the part accommodated by the housing 200. The hot-water supply unit 100 is installed to be used on an installation surface S which is a substantially horizontal plane such that the bottom plate 240 faces the installation surface S. More specifically, the hot-water supply unit 100 is preferably installed such that all the legs 241 are in contact with the installation surface S.

The internal unit 120 includes a tank 300, a thermal insulator 400, a support plate 500, a main frame 600 and a machinery unit 700. The tank 300 and the thermal insulator 400 are positioned on the lower side of the housing 200. The main frame 600 and the machinery unit 700 are positioned on the upper side of the housing 200. The support plate 500 is positioned between the thermal insulator 400 and the main frame 600.

The machinery unit 700 is configured to heat up a heating medium. In this embodiment, the heating medium is water. More specifically, the machinery unit 700 is configured to transfer the heat supplied from the heat pump system to the heating medium by a heat exchanger. The machinery unit 700 is further configured to circulate the heating medium to heat up the tank 300. The machinery unit 700 includes a heating mechanism, a piping and a controller, as detailed later.

The tank 300, arranged under the machinery unit 700, is configured to store water heated up by the heating medium. More specifically, the tank 300 is configured to transfer the heat of the heating medium to the water stored in the tank 300.

The thermal insulator 400 is made of a material with high thermal insulating properties. The thermal insulator 400 is substantially surrounding the tank 300 and adhering to the outer surface of the tank 300.

The support plate 500 lies on or over the top of the thermal insulator 400. Preferably, the support plate 500 is disposed on the thermal insulator 400. The support plate 500 supports the main frame 600 from below. The support plate 500 is hard enough to stabilize the position of the main frame 600 which supports the machinery unit 700.

The main frame 600 supports the machinery unit 700 therein.

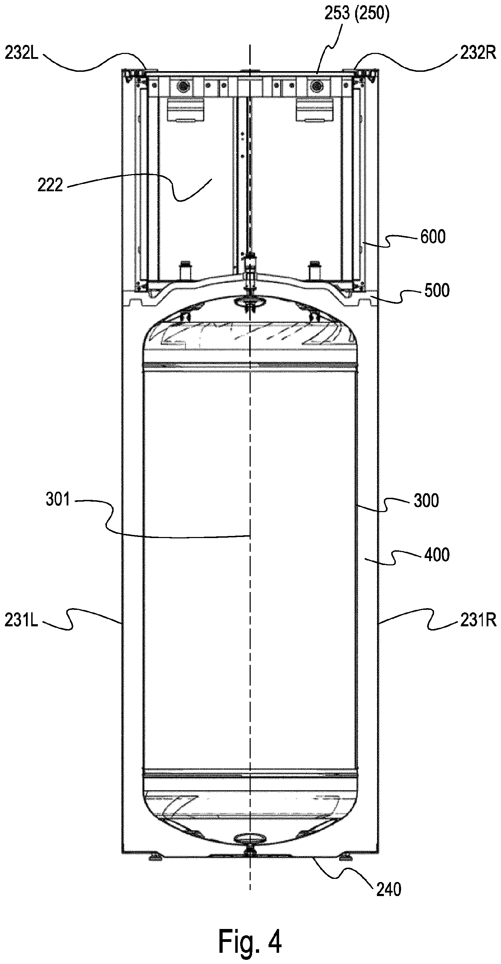

Fig. 4 is a vertical cross sectional view of the hot-water supply unit 100 when cut by a plane extending in parallel to the X-Z plane and passing the centre of the tank 300, with some parts (particularly the machinery unit 700) omitted.

The tank 300 preferably has a tubular shape with a principal axis 301 extending in the vertical direction. Although the tank 300 may be partially connected to the bottom plate 240 at the bottom and to the support plate 500 at the top, there are clearances between the tank 300 and both the bottom plate 240 and the support plate 500. Also, there is a clearance between the tank 300 and each of the four side plates 210, 220, 230R,230L.

The thermal insulator 400 surrounds substantially all over the outside surface of the tank 300 from the bottom to the top so as to fill the most part of the above clearances. Moreover, the thermal insulator 400 is adhered to the bottom plate 240, the tank 300 and the support plate 500. Furthermore, the material of the thermal insulator 400 is hard enough to stabilize the positions of the tank 400 and the support plate 500 with respect to the bottom plate 240 in the use state.

Meanwhile, the thermal insulator 400 is not adhered to the four side plates 210, 220, 230R, 230L.

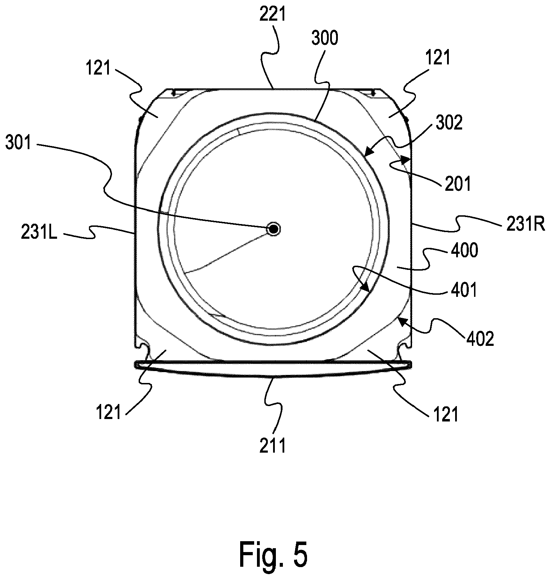

Fig. 5 is a horizontal cross sectional view of the hot-water supply unit 100 when cut by a plane extending in parallel to the X-Y plane and passing the centre of the tank 300, with some parts omitted.

The thermal insulator 400 has a ring-shaped cross section. The inner surface of the thermal insulator 400 (hereinafter referred to as "the insulator inner surface 401") adheres to the outer surface of the tank 300 (hereinafter referred to as "the tank outer surface 302").

On the other hand, the outer surface of the thermal insulator 400 (hereinafter referred to as "the insulator outer surface 402") does not adhere to the inner surface of the four side plates 210, 220, 230R, 230L (hereinafter referred to as "the housing inner surface 201"). The insulator outer surface 402 preferably has four planes respectively facing the four side plates 210, 220, 230R, 230L.

This configuration of the thermal insulator 400 is achieved by forming the thermal insulator 400 through a foaming process of a foam filler. In this foaming process, the foam filler such as urethane foams within a space which is defined by the tank 300, the bottom plate 240, the support plate 500, and a die (not shown) which corresponds to the four side plates 210, 220, 230R, 230L. The foam filler foams and dries within the space to be the thermal insulator 400. After the foam filler foams and dries within the space, only the die is removed from the foam filler. The process of forming the insulator (hereinafter referred to as "the insulator forming process") will be detailed later.

The four planes of the insulator outer surface 402 may be respectively in contact with the four side plates 210, 220, 230R, 230L. Yet, the outline of the ring-shaped cross section of the thermal insulator 400, i.e. the insulator outer surface 402 in top plan view, preferably has a shape such that four corner spaces 121 are formed between the housing inner surface 201 and the insulator outer surface 402 at each corner of the housing 200. Each the corner space 121 is preferably formed from the bottom plate 240 till the support plate 500. Thereby, the amount of foam filler and the time to foam can be reduced in the insulator forming process while achieving a desired thermal insulation performance of the thermal insulator 400. The corner space 121 may be not provided at the bottom for enhancing the stabilizing performance of the thermal insulator 400.

More specifically, the outline of the ring-shaped cross section of the thermal insulator 400 preferably has four straight edges and four sub-edges. The four sub-edges are straight or curved. Each of the four sub-edges connects two among the four straight edges. For example, the outline of such a ring-shaped cross section has an octagonal-like shape. Thereby, the volume with in the housing 200 can be minimised to accommodate the thermal insulator 400. Thus, the size of the housing 200, in particular the area size for installing the hot-water supply unit 100, can be minimised. Meanwhile, the octagonal-like shape is nearer to the circular-shape of the cross section of the tank outer surface 302. Thus, the amount of the foam filler can be further optimized.

### Detailed Configuration of Unit Main Body

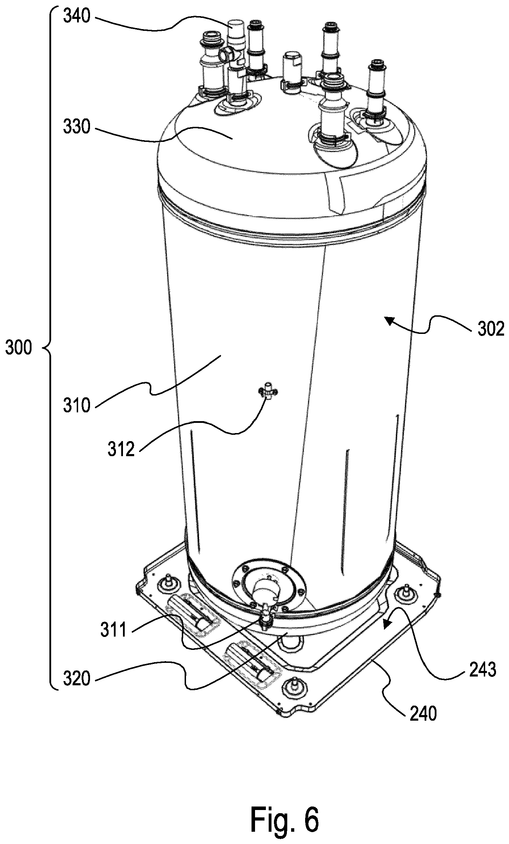

Fig. 6 is a perspective view of the tank 300 along with the bottom plate 240.

The tank 300 is positioned above the top surface of the bottom plate 240 (hereinafter referred to as "the bottom inner surface 243") by virtue of the thermal insulator 400 which is not illustrated in Fig. 6. The tank 300 has a tank side face 310, a tank bottom face 320, and a tank top face 330. The tank side face 310 preferably forms a cylindrical shape. The tank bottom face 320 preferably has a convex shape protruding downward and closes the cylindrical shape on the bottom side. The tank top face 330 preferably has a convex shape protruding upward and closes the cylindrical shape on the top side.

The tank side face 310 is preferably provided with a tank drain port 311 and a temperature sensor 312. The tank drain port 311 is configured to discharge the water in the tank 300. The temperature sensor 312 is configured to detect the temperature of the water in the tank 300.

The tank top face 330 is provided with a tank pipe port 340. The tank pipe port 340 comprises a plurality of pipe ends protruding upwardly along the vertical direction from the tank top face 330. The pipe ends are connected to the above-mentioned heating mechanism and piping of the machinery unit 700 (see Fig. 3).

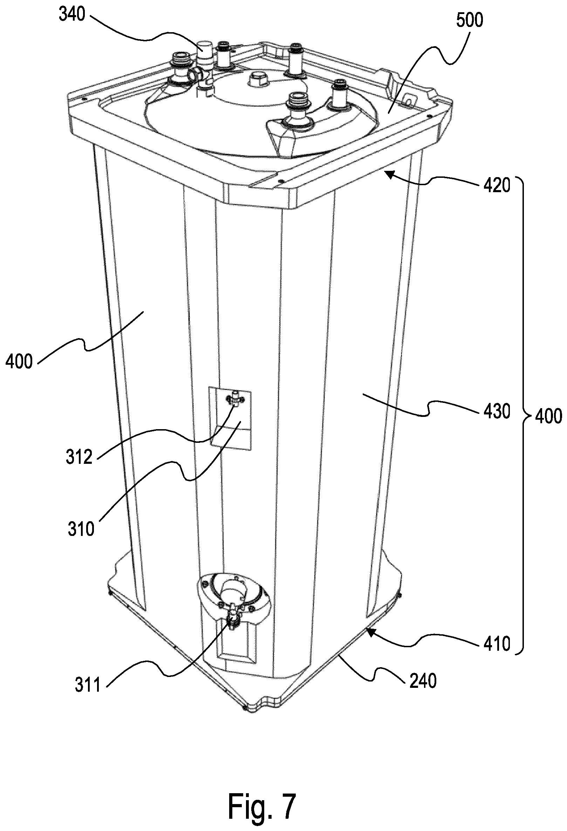

Fig. 7 is a perspective view of the thermal insulator 400 along with the bottom plate 240, the tank 300 and the support plate 500.

The thermal insulator 400 is configured to connect the tank 300, a bottom plate 240 of the housing 200, and the support plate 500 in one piece. The thermal insulator 400 has an insulator bottom part 410, an insulator top part 420 and an insulator side part 430.

The insulator bottom part 410 is the part which covers the tank bottom face 320 and adheres to the substantially entire bottom inner surface 243. The insulator bottom part 410 preferably adheres to the substantially entire tank bottom face 320 (see Fig. 6). These adherences may be achieved by the insulator forming process.

The insulator top part 420 covers and adheres to the substantially entire tank top face 330 (see Fig. 6). The insulator top part preferably adheres to the support plate 500 as well. The insulator top part 420 also adheres to the bottom surface of the support plate 500. Preferably, the contact area between the insulator top part 420 and the bottom surface of the support plate 500 is larger than the contact area between the insulator top part 420 and the tank top face 330. These adherences may be achieved by the insulator forming process. The pipe ends of the tank pipe port 340 penetrate the insulator top part 420 and the support plate 500.

The insulator side part 430 connects the insulator top part 420 and the insulator side part 430. The insulator side part 430 covers and adheres to the tank side face 310 (see Fig. 6). This adherence may be achieved by the insulator forming process. The insulator side part 430 preferably has apertures which expose the tank drain port 311 and the temperature sensor 312 of the tank side face 310. These apertures are formed by, for instance, covering the parts to be exposed by portions of the die in the insulator forming process. The insulator side part 430 has a casting surface which is formed by removing the die in the insulator forming process.

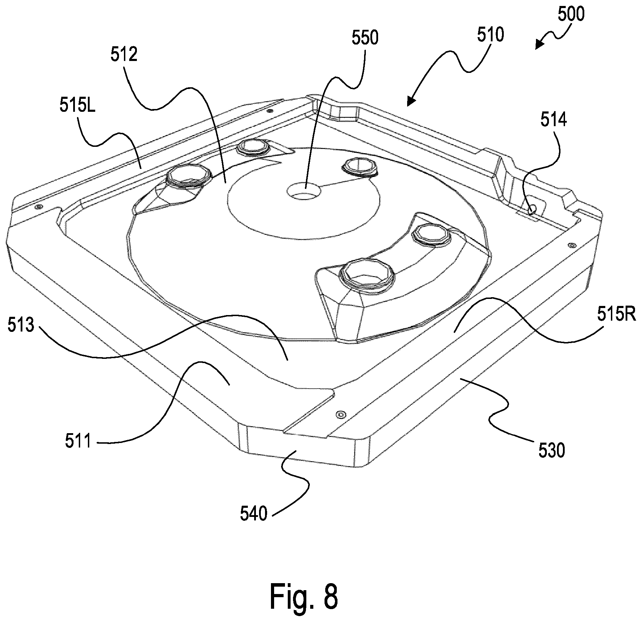

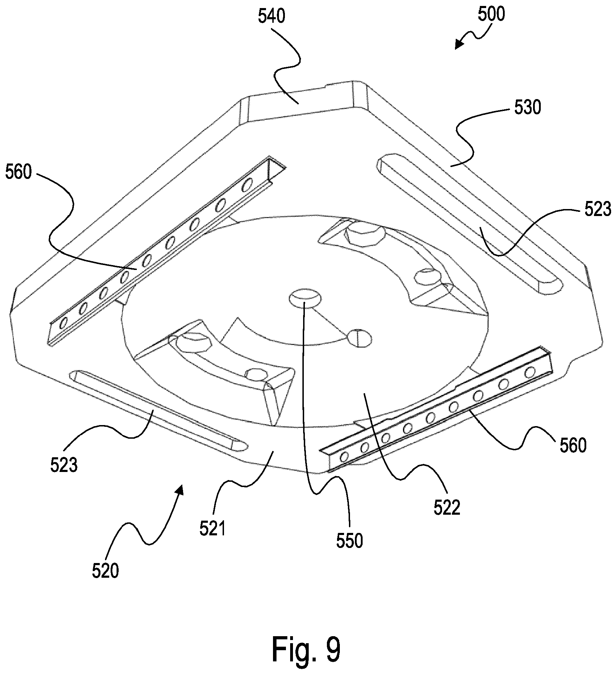

Fig. 8 is a top perspective view of the support plate 500. Fig. 9 is a bottom perspective view of the support plate 500.

The support plate 500 preferably has substantially a rectangular-like shape extending in a horizontal plane. The support plate 500 has a plate top surface 510 at the top and a plate bottom surface 520 at the bottom which are substantially in parallel to each other. The support plate 500 has four plate side surfaces 530 which form edges of the plate top surface 510 and the plate bottom surface 520 in a top plan view. Each of the four plate side surfaces 530 is preferably parallel to a vertical plane. The support plate 500 preferably has four plate corner parts 540 each of which is a chamfered corner between the neighbouring plate side surfaces 530.

The support plate 500 is provided with a plurality of plate apertures 550. The plate apertures 550 are through holes extending from the plate bottom surface 520 to the plate top surface 510. The plate apertures 550 preferably respectively correspond to the pipe ends of the tank pipe port 340 (see Figs. 6 and 7).

The plate bottom surface 520 preferably includes a bottom flat part 521 and a plate concave part 522. The bottom flat part 521 is a flat surface substantially parallel to a horizontal plane. The plate concave part 522 is formed in the middle of the bottom flat part 521. The plate concave part 522 preferably has a shape substantially similar with the shape of the tank top face 330 (see Fig. 6). In this case, the plate concave part 522 is formed so as to extend in parallel to the tank top face 330.

The bottom flat part 521 is preferably provided with two plate recessed parts 523 disposed on the opposite sides with respect to the plate concave part 522 in the X-axis direction. Each of the plate recessed parts 523 may have an elongate shape extending over the range of the plate concave part 522 in the Y-axis direction. It is also preferable that the bottom flat part 521 is provided with two reinforcing members 560 disposed on the opposite sides with respect to the plate concave part 522 in the Y-axis direction. The reinforcing members 560 may be elongate metal angle bars fixed to the bottom flat part 521 and extending over the range of the plate concave part 522 in the X-axis direction.

The plate top surface 510 preferably includes a wall part 511 and a plate convex part 512. The wall part 511 is disposed along the plate side surfaces 530 and the plate corner parts 540 so as to surround the rest part of the plate top surface 510. The plate convex part 512 is formed in the middle of the area surrounded by the wall part 511. The plate convex part 512 preferably has a shape substantially similar with the shape of the plate concave part 522. In this case, the plate convex part 512 is formed so as to extend in parallel to the plate concave part 522.

A drain receiving part 513 is formed at between the wall part 511 and the plate convex part 512. The drain receiving part 513 is preferably a flat surface slightly slanted with respect to a horizontal plane. A drain discharge port 514 may be provided in the wall part 511 near the lowest part of the drain receiving part 513. The drain discharge port 514 is a through hole penetrating the wall part 511. The drain discharge port 514 may be connected in the outside of the wall part 511 to a drain tube (not shown) downwardly extending to the outside of the hot-water supply unit 100. Thus, the plate top surface 510 is configured to receive and discharge water or the like fallen from above.

The top surface of the wall part 511 is preferably formed with a right frame receiving part 515R and a left frame receiving part 515L disposed on the opposite sides with respect to the plate convex part 512 in the X-axis direction. Each of the right frame receiving part 515R and the left frame receiving part 515L may have an elongate shape extending over substantially entire range of the support plate 500 in the Y-axis direction.

The reinforcing members 560s and the right and left frame receiving parts 515R, 515L may be arranged to form a rectangular frame along the edge of the support plate 500. To the right and left frame receiving parts 515R, as detailed later, two bottom parts of the main frame 600 (see Figs. 3, 4) may be respectively fixed. The stiffness of the support plate 500 can be improved by the reinforcing members 560s and the bottom parts of the main frame 600.

The support plate 500 may be made of a material same as the material of the thermal insulator 400, preferably except for the reinforcing members 560. The density of the support plate 500 (except for the reinforcing members 560) may be higher than the he density of the thermal insulator 400. By this, the stiffness of the support plate 500 can be enhanced while being firmly adhered to the thermal insulator 400.

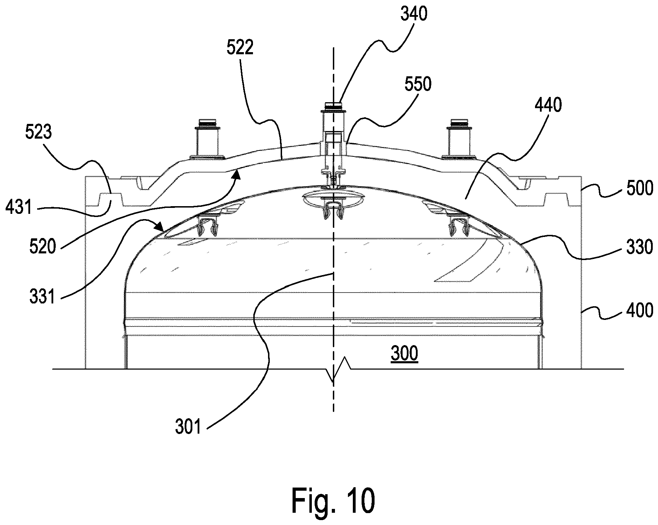

Fig. 10 is an enlarged vertical cross sectional view of the support plate 500 and the peripheral part thereof when cut by a plane extending in parallel to the X-Z plane and passing the centre of the tank 300, with some parts omitted.

The insulator top part 420 of the thermal insulator 400 adheres to the plate bottom surface 520 of the support plate 500, preferably directly above the area where the thermal insulator 400 adheres to the tank top face 330 of the tank 300.

As mentioned above, the plate bottom surface 520 may have the plate concave part 522 with the shape extending in parallel to the convex shape of the tank top face 330. By this configuration, the insulator top part 420 naturally has the shape extending along the convex shape of the tank top face 330. Thus, the tank top face 330, the insulator top part 420 and the plate concave part 522 have a layered convex structure. Moreover, when the plate recessed parts 523 of the support plate 500 are provided, insulator protruding parts 431 engaging with the plate recessed parts 523 are formed on the insulator top part 420. Furthermore, when the reinforcing members 560 with the outwardly protruding parts (see Fig. 9) are provided, insulator recessed parts (not shown) engaging with the protruding parts are formed on the insulator top part 420.

The recessed parts of the plate bottom surface 520, such as the plate concave part 522 and the plate recessed parts 523, are provided for the purpose of filling the foam filler uniformly over the space between the plate bottom surface 520 and the tank top face 330. As a side effect, the support plate 500 is configured to engage with the insulator top part 420 (i.e. the dried foam filler) by a plurality of concave-convex structures. By this, the position of the support plate 500 can be stabilized with respect to the thermal insulator 400 more securely.

As mentioned above, the tank top face 330, the insulator top part 420 and the plate concave part 522 may have a layered convex structure. By this, the thickness of the insulator top part 420 can be substantially uniform, and the amount of the material of the insulator top part 420 can be optimised. In addition, the plate convex part 512 of the plate top surface 510 also may have the shape extending in parallel to the convex shape of the tank top face 330. Thereby, the thickness of the support plate 500 at the plate concave part 522 can be substantially uniform, and the amount of the material of the support plate 500 can be optimised.

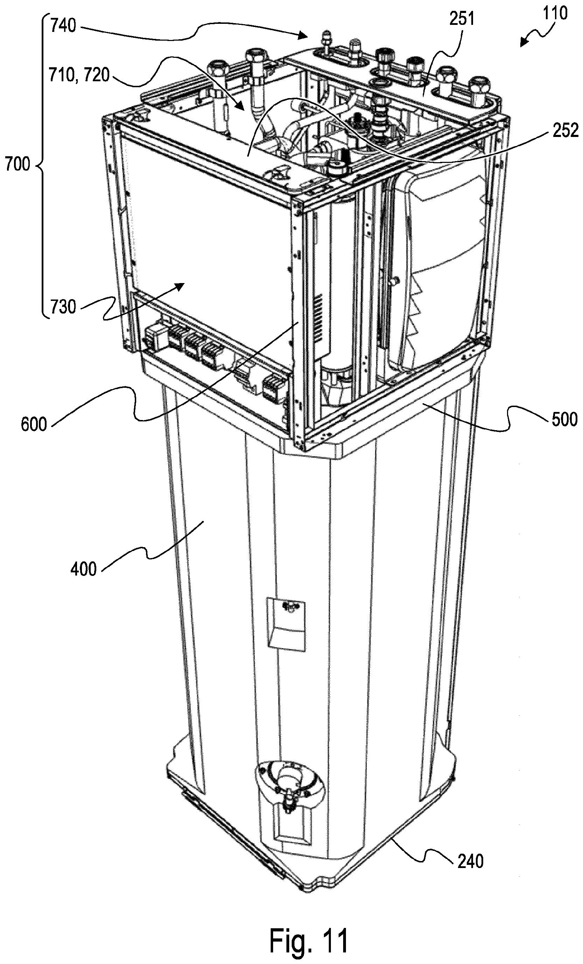

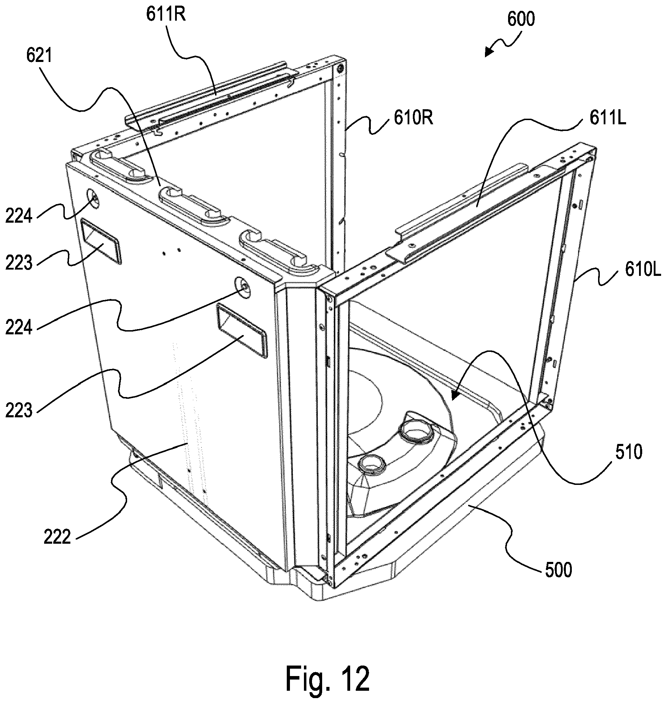

Fig. 11 is a perspective view of the unit main body 110. Fig. 12 is a rear perspective view of the main frame 600 along with the support plate 500 and the rear upper plate 222.

The main frame 600 is fixed to the support plate 500. More particularly, the two bottom parts of the main frame 600 are fixed to the right and left frame receiving parts 515R, 515L on the plate top surface 510 (see Fig. 8). The main frame 600 preferably has a right rectangular frame 610R and a left rectangular frame 610L.

The right rectangular frame 610R is preferably a rectangular-like frame made of one or a plurality of metal angle bars. The right rectangular frame 610R is fixed to the right frame receiving part 515R by screw fixing or the like to stand on the right side of the plate top surface 510. The length of the right rectangular frame 610R may be substantially same as the length of the support plate 500 in the depth direction. The right rectangular frame 610R is provided with a right hook plate 611R on the top. In other words, the right hook plate 611R is arranged on a top-right edge of the main frame 600. The right hook plate 611R is preferably an elongate plate extending in the Y-axis direction, i.e. in parallel with the right side plate 230R (see Fig. 1) in the use state.

The left rectangular frame 610L is preferably a rectangular-like frame made of one or a plurality of metal angle bars. The left rectangular frame 610L is fixed to the left frame receiving part 515L by screw fixing or the like to stand on the left side of the plate top surface 510. The length of the left rectangular frame 610L may be substantially same as the length of the support plate 500 in the depth direction. The left rectangular frame 610L is provided with a left hook plate 611L on the top. In other words, the left hook plate 611L is arranged on a top-left edge of the main frame 600. The left hook plate 611L is preferably an elongate plate extending in the Y-axis direction, i.e. in parallel with the left side plate 230L (see Fig. 2) in the use state.

The right side end of the rear upper plate 222 (see Fig. 2) is preferably fixed to the rear end of the right rectangular frame 610R by screw fixing or the like. Likewise, the left side end of the rear upper plate 222 is preferably fixed to the rear end of the left rectangular frame 610L by screw fixing or the like. With this configuration, the rear upper plate 222 may be regarded as a part of the main frame 600.

The top rear plate 251 and the top front plate 252 may be fixed to the top of the main frame 600. Moreover, the top main plate 253 (see Fig. 1) may also be fixed to the top of the main frame 600. With these configurations, the rear upper plate 222, the top front plate 252 and/or the top main plate 253 may be regarded as a part of the main frame 600

The machinery unit 700 preferably includes heating mechanism 710, the piping 720 and the controller 730. The heating mechanism 710 and the piping 720 are substantially arranged within the internal space of the main frame 600. The controller 730 may be arranged on the front side of the internal space of the main frame 600, i.e. on the back side of the front upper plate 212 (see Fig. 1).

The piping 720 is fixed to the main frame 600. The piping 720 includes, for instance, a refrigerant pipe line, an internal circulation pipe line, an internal circulation pump, the heat exchanger and a water pipe line. The refrigerant pipe line is a part of a refrigerant circuit for circulating refrigerant between an external heat pump unit and the heat exchanger in the heat pump system. The internal circulation pipe line is configured to circulate the heating medium between the heat exchanger and a heat exchange pipe arranged in the tank 300. The heat exchanger is configured to transfer heat of the refrigerant of refrigerant pipe line to the heating medium of the internal circulation pipe line. The heat exchange pipe in the tank 300 is configured to transfer heat of the heating medium of the internal circulation pipe line to the water stored in the tank 300.

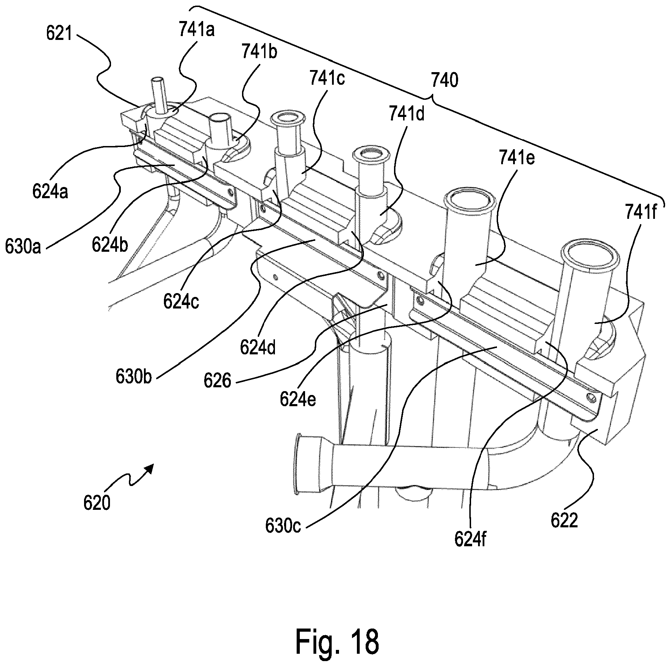

The piping 720 has a unit pipe port 740 including, for instance, a pair of refrigerant pipes which are a part of the refrigerant pipe line and two water pipes which are a part of the water pipe line. The unit pipe port 740 is preferably upwardly protruding out from the internal space of the main frame 600 through the top rear plate 251. Preferably, a pipe receiver 621 configured to receive the unit pipe port 740 is disposed on the inner surface of the to the rear upper plate 222. The pipe receiver 621 is a part of a pipe retainer 620 (see Fig. 18) detailed later.

The controller 730 is fixed to the main frame 600. The controller 730 includes an arithmetic circuit such as a CPU (Central Processing Unit), a work memory used by the CPU, such as a RAM (Random Access Memory), and a recording medium storing control programs and information used by the CPU, such as a ROM (Read Only Memory), although they are not shown. Thus, controller 730 is configured to perform information processing and signal processing by the CPU executing the control programs to control the operation of the hot-water supply unit 100.

The controller 730 also may include the user interface including a display device, operation buttons or the like. The user interface may be disposed on the back side of the front upper plate 212. The controller 730 is configured to accept a manual operation from a user and/or provide information to the user through the user interface

Thus, the position of the main frame 600, which is supporting the machinery unit 700, is stabilised with respect to the support plate 500. As mentioned above, the position of the support plate 500 with respect to the bottom plate 240 is stabilised by the tank 300 and the thermal insulator 400. Hence, the unit main body 110 is configured to support the tank 300 to fixedly maintain an upright posture, and support the machinery unit 700 to be fixedly positioned above the tank 300.

Since the unit main body 110 is solid, there is no need to support the tank 300 and the machinery unit 700 by the four side plates 210, 220, 230R, 230L. Therefore, the four side plates 210, 220, 230R, 230L can be made easily detachable from the unit main body 110.

In view of the fact that the machinery unit 700 is generally heavy, the hot-water supply unit 100 needs a structure for securely supporting such a heavy part at a position above the tank 300. In this regard, with the hot-water supply unit 100, there is no need to make the tank 300 thicker or employ additional frames extending over the entire height range of the hot-water supply unit 100. Hence, the number of elements for constituting the hot-water supply unit 100 can be reduced without increasing the weight of the hot-water supply unit 100. Moreover, the support plate 500 can double as a member for supporting the main frame 600 which supports the machinery unit 700 and a member for treating the water or the like fallen from the machinery unit 700. Thus, the number of elements can be further reduced.

### Structure for Side Plate Attachment

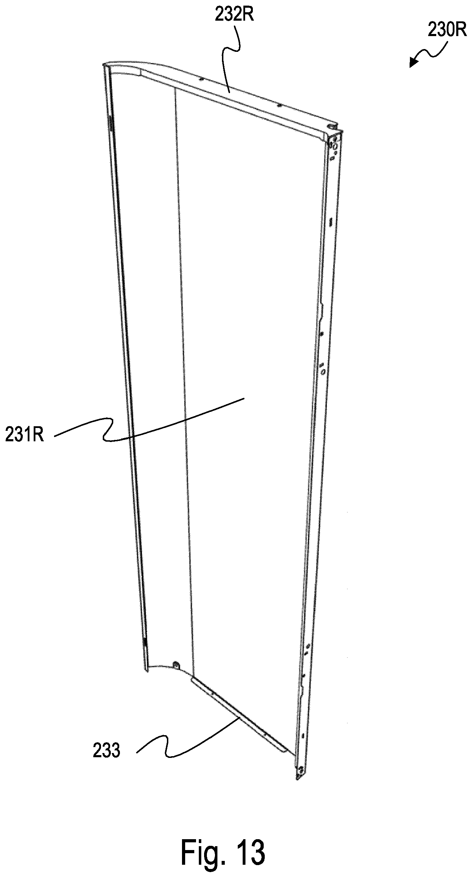

Fig. 13 is a perspective view of the right side plate 230R in a detached state.

As mentioned above, the right hanging plate 232R may be fixed to the upper end of the right side plate 230R. The right hanging plate 232R is preferably horizontally protruding from the right side plate 230R in a direction towards the inner side of the right main plate 231R which faces the inner area between the front side plate 210 and the rear side plate 220.

The right side plate 230R may also has a hook part 233 at the bottom end of the right side plate 230R. The hook part 233 is preferably a plate-like member horizontally protruding from the right side plate 230R in a direction towards the inner side of the right main plate 231R. The distance between the right hanging plate 232R and the hook part 233 is substantially same as the length from the main frame 600 to the bottom plate. The vending or curving parts of the right side plate 230R, such as the hook part 233 and the curving rear part, may be easily formed by a vending processing of the steel plate.

The right hanging plate 232R is preferably configured to engage with the right hook plate 611R of the main frame 600 (see Fig. 11) to dangle the right side plate 230R from the top-right edge of the main frame 600. The hook part 233 is preferably configured to be slidably in contact with the bottom surface of the bottom plate 240 at the bottom-right edge of the bottom plate 240 when the right side plate 230R is dangling from the top-right edge of the main frame 600.

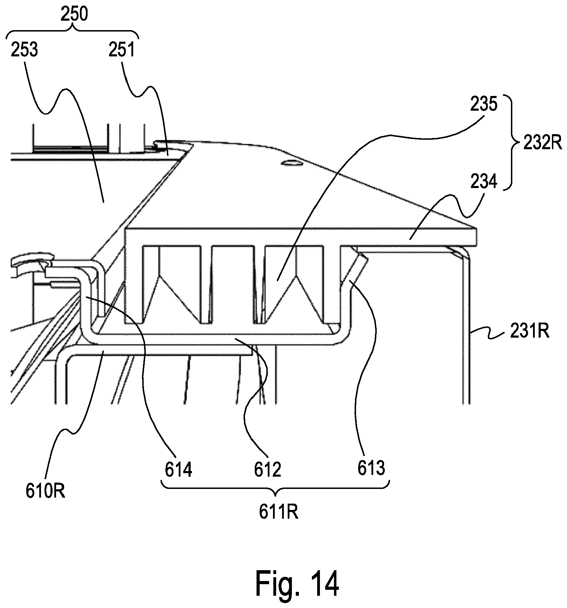

Fig. 14 is a perspective cross sectional view of the right hanging plate 232R and the peripheral part thereof.

As explained above, the right hook plate 611R is disposed on top surface of the right rectangular frame 610R of the main frame 600 (see Fig. 12). For instance, the right hook plate 611R has a hook base 612, an outer wall part 613 and an inner wall part 614. The hook base 612 is an elongate plate extending in the Y-axis direction, i.e. in parallel with the right side plate 230R (see Fig. 1) in the use state. The right hook plate 611R has an outer end (a right end) nearer to the right side plate 230R and an inner end (a left end) farther from the right side plate 230R. The outer wall part 613 is protruding upward from the outer end of the hook base 612. The inner wall part 614 is protruding upward from the inner end of the hook base 612. The top edge parts of the outer wall part 613 and the inner wall part 614 are bending outward. A vending edge part of the top main plate 253 (also see Fig. 1) may be placed on the inner wall part 614.

The right hanging plate 232R preferably has a hanging base 234 and an engagement part 235. The hanging base 234 is an elongate plate orthogonal to the right main plate 231R. The engagement part 235 is a protruding part protruding downward from the right hanging plate 232R on the inner side of the right main plate 231R. The bottom surface of the engagement part 235 preferably forms a plane orthogonal to the right main plate 231R.

For instance, the width of the engagement part 235 is slightly smaller than the distance between the outer wall part 613 and the vending edge part of the top main plate 253 placed on the inner wall part 614. Thereby, the engagement part 235 can be fitted into the right hook plate 611R from above such that the right hanging plate 232R engages with the right hook plate 611R.

Since the top edge part of the outer wall part 613 a is vending outward, the engagement part 235 can be fitted into the right hook plate 611R smoothly. In a state where the right hanging plate 232R engages with the right hook plate 611R, the most weight of the right side plate 230R is imposed on the right hanging plate 232R. By forming the engagement part 235 with aggregate of the vertically extending plates, the stiffness of the right hanging plate 232R can be improved enough to bear the weight while avoiding an increase in the weight.

In a state where the right hanging plate 232R is hooked to the right hook plate 611R, the right side plate 230R can be swung in the X-Z plane with the engagement part 235 as a fulcrum. The protruding direction of the hook part 233 (see Fig. 13) may be configured to coincide with both the circumferential direction of this swing of the right side plate 230R and the extension direction of the bottom surface of the bottom plate 240. In this case, the hook part 233 can engage with the bottom plate 240 just by swinging the right side plate 230R in a direction towards the unit main body 110 after hanging the right side plate 230R to the right hook plate 611R.

The position of the right side plate 230R can be stabilized just by the weight of the right side plate 230R imposed to the right hook plate 611R, the engagement of the right side plate 230R and the right hook plate 611R, and the frictional force between the hook part 233 and the bottom plate 240. Thus, the right hook plate 611R can be fixed only to the main frame 600 and the bottom plate 240 in an easily attachable and detachable manner. The right side plate 230R may be in contact with the thermal insulator 400, but is not fixed to the thermal insulator 400.

The hot-water supply unit 100 has the same or the similar configuration for each of the left side plate 230L, the front side plate 210 and the rear side plate 220. The four side plates 210, 220, 230R, 230L may be directly fixed to the main frame 600, while not directly fixed to the thermal insulator 400. The four side plates 210, 220, 230R, 230L need not necessarily to be fixed to the bottom plate 240 if the position of the four side plates 210, 220, 230R, 230L are fully stabilized.

For example, the front lower plate 211 is provided with one or more of protrusions in the part which faces the front side of the bottom plate 240 and one or more of fixing plates each with a hole in the part which faces the front side of the main frame 600. The bottom plate 240 is provided with one or more of holes at positions corresponding to the protrusions of the front lower plate 211, and the main frame 600 is provided with one or more of holes at positions corresponding to the holes of the front lower plate 211. The front lower plate 211 is attached to the bottom plate 240 by inserting the protrusions into the corresponding holes of the bottom plate 240, respectively, and then attached to the main frame 600 by fixing the holes to the corresponding holes of the main frame 600 with screws, respectively. This configuration also allows the front lower plate 211 to be stabilized. The four side plates 210, 220, 230R, 230L may be fastened, hanged, hooked, or stuck to the main frame 600. With such a configuration, the hot-water supply unit 100 can be easily assembled.

The four plate side surfaces 530 of the support plate 500 (see Fig. 8) are preferably configured to be in contact with the four side plates 210, 220, 230R, 230L, respectively, in the use state. By this, both the position of the support plate 500 and the positions of the four side plates 210, 220, 230R, 230L are stabilized more securely. the same configuration may be applied to the main frame 600, the insulator outer surface 402 of the thermal insulator 400, the right rectangular frame 610R and the left rectangular frame 610L (see Figs. 11 and 12).

As mentioned above, since the unit main body 110 is solid, the hot-water supply unit 100 can be solid even if the four side plates 210, 220, 230R, 230L are configured to be detachable.

As mentioned above, the housing 200 tends to get scratches and dents during the transportation to cause disfigurement of the hot-water supply unit 100. When the damaged housing 200 is exchanged with a new housing without damaging other elements accommodated in the housing, the appearance of the hot-water supply unit 100 can be refreshed to as original while maintaining the performance of the hot-water supply unit.

Some parts of the housing 200 may be fixed to the main frame 600 to enhance the solidity of the unit main body 110. The rear upper plate 222 (see Fig. 2 and 12) is preferably fixed to the main frame 600. In this case, the pipe receiver 621 (see Fig. 12) is preferably fixed to the rear upper plate 222 by fixing members 224 such as screws or rivets. In other words, the pipe receiver 621 is preferably fixed to the main frame 600.

### Structure for Pipe Ends Fixing

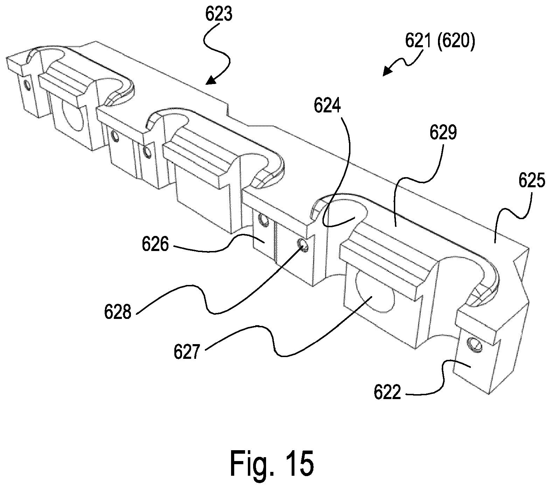

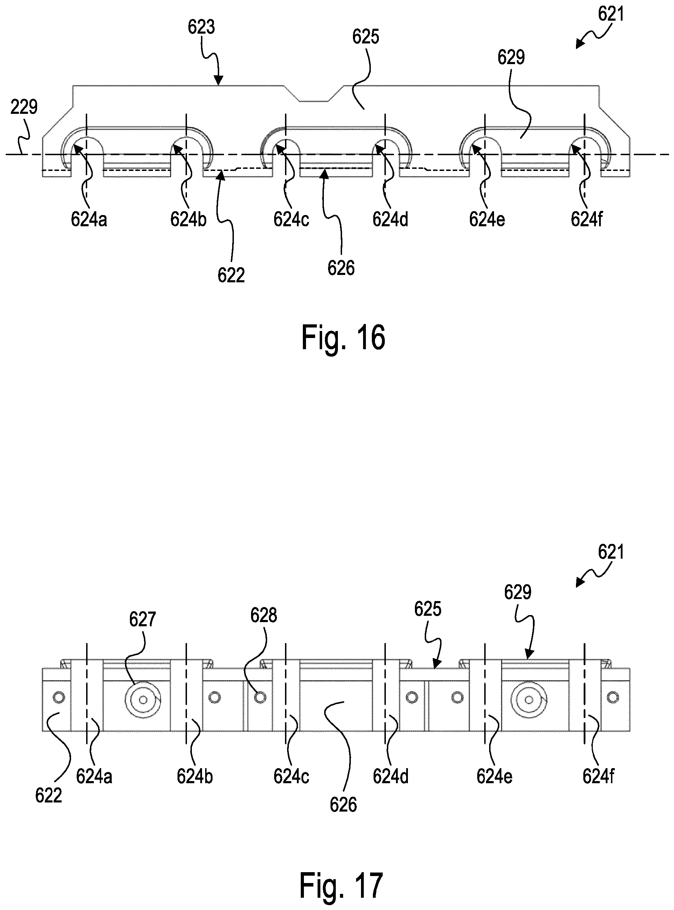

Fig. 15 is a perspective view of the pipe receiver 621. Fig. 16 is a top plan view of the pipe receiver 621. Fig. 17 is a front plan view of the pipe receiver 621.

The pipe receiver 621 preferably has a rectangular column-like shape extending in the X axis direction. The pipe receiver 621 has a retainer font side 622 and a retainer rear side 623 which are opposing in the Y axis direction. The retainer font side 622 faces the inner area of the main frame 600. The retainer rear side 623 is the part which is in contact with the rear upper plate 222. The retainer rear side 623 preferably has a shape substantially same as the inner surface of tor part of the rear upper plate 222. The pipe receiver 621 may have parts which are in contact with the right main plate 231R and the left main plate 231L (see Figs. 1 and 2).

For instance, the pipe receiver 621 has first to sixths pipe receiving surfaces 624a-624f. Each of the first to sixths pipe receiving surfaces 624a-624f (hereinafter referred to as "the pipe receiving surfaces 624") preferably has a U-shape in a top plan view. Each of the pipe receiving surfaces 624 preferably extends from the bottom face of the pipe receiver 621 to the top face of the pipe receiver 621 (hereinafter referred to as "the retainer top face 625") along a vertical direction. The pipe receiving surfaces 624 may open to the same direction on the retainer font side 622 in a top plan view. More preferably, each of the pipe receiving surfaces 624 has a pair of opposing flat surfaces. The flat surfaces of all the pipe receiving surfaces 624 may be in parallel to each other, and extend in parallel to the Y-Z plane.

For instance, the first and second pipe receiving surfaces 624a, 624b are configured to receive a pair of refrigerant pipes for the heat pump system, respectively. The third and fourth pipe receiving surfaces 624c, 624d are configured to receive a makeup water pipe and a hot-water pipe for the hot-water supply system, respectively. And, the fifth and sixth pipe receiving surfaces 624e, 624f are configured to receive a pair of the heating pipes for the space heating system, respectively.

More specifically, at each of the pipe receiving surface 624, the distance of the pair of flat surfaces may be substantially the same as the outer diameter of the corresponding pipe, and the curvature of the curving deepmost part of the pipe receiving surface 624 may be substantially the same as the outer curvature of the corresponding pipe. Thereby, the inner shape of each the pipe receiving surfaces 624 can fit with the outer shape of the corresponding pipe. Here, the pipes may include pipe insulation covers or the like.

Thus, the pipe receiver 621 is configured such that at least the two water pipes are arranged next to each other and that two refrigerant pipes are arranged next to each other. Moreover, the pipe receiver 621 is configured to receive the pipes such that each pipe is positioned substantially linearly. Hereinafter, the parts of the pipes which constitute the unit pipe port 740 and are fitted into the pipe receiving surfaces 624 are referred to as "the pipe ends." The pipe ends corresponding to the first to sixth pipe receiving surfaces 624a-624f are referred to as "the first to sixth pipe ends" in this order.

The pipe receiving surfaces 624 may be formed such that the centre axes of the pipe ends are included in a virtual plane 229 parallel to the rear side plate 220. Meanwhile, the outer diameters of the pipe ends may be different. For instance, the outer diameters of the first, second, fifth and sixth pipe ends are substantially the same, while the outer diameters of the third and fourth pipe ends are substantially the same and smaller than the outer diameters of the other pipe ends.

The retainer front side 622 may be substantially parallel to a virtual plane 229. The distance between each of the deep most parts of the first, second, fifth and sixth pipe receiving surfaces 624a, 624b, 624e, 624f and the retainer front side 622 is preferably substantially the same as the outer diameter of the first, second, fifth and sixth pipe ends. The top part of the retainer front side 622 may be horizontally extending in a direction towards the inner area of the main frame 600.

The retainer front side 622 is preferably formed with a retainer recessed part 626 at a position where the third and fourth pipe receiving surfaces 624c, 624d are provided. The retainer recessed part 626 may be substantially parallel to the virtual plane 229 and recessed with respect to the retainer front side 622. The distance between each of the deep most parts of the third and fourth pipe receiving surfaces 624c, 624d and the retainer recessed part 626 is preferably substantially the same as the outer diameter of the third and fourth pipe ends.

The retainer front side 622 may be also formed with a couple of retainer screw holes 627 and three pairs of retainer rivet holes 628.

The retainer screw holes 627 are screw holes to which the fixing members 224 are applied so as to fix the pipe receiver 621 to the rear upper plate 222 (see Fig. 12). One of the retainer screw holes 627 is preferably disposed at between the first pipe receiving surface 624a and the second pipe receiving surface 624b. The other of the retainer screw holes 627 is preferably disposed at between the fifth pipe receiving surface 624e and the sixth pipe receiving surface 624f. However, the number and positions of the retainer screw holes 627 are not limited to this.

The first pair of the retainer rivet holes 628 are preferably disposed on the both sides of area where the first and second pipe receiving surfaces 624a, 624b are formed. The second pair of the retainer rivet holes 628 are preferably disposed on the both sides of area where the third and fourth pipe receiving surfaces 624c, 624d are formed. The third pair of the retainer rivet holes 628 are preferably disposed on the both sides of area where the fifth and sixth pipe receiving surfaces 624e, 624f are formed. However, the number and positions of the retainer rivet holes 628 are not limited to this.

The retainer top face 625 is receiving formed with three retainer protruding parts 629. The first retainer protruding part 629 may form the upper part of the first and second pipe receiving surfaces 624a, 624b. The second retainer protruding part 629 may form the upper part of the third and fourth pipe receiving surfaces 624c, 624d. The third retainer protruding part 629 may form the upper part of the fifth and sixth pipe receiving surfaces 624e, 624f.

The pipe receiver 621 may be formed by moulding. By this, the pipe receiver 621 can be obtained at a low cost.

With the above configuration, all the pipe receiving surfaces 624a-624f are facing the inner area of the mainframe 600 and opening towards the same direction. Moreover, the pipe receiving surfaces 624a-624f are configured to receive the first to sixth pipe ends such that the first to sixth pipe ends align along the rear upper plate 222. Thus, fitting work of the pipe ends to the pipe receiver 621 is facilitated.

Fitting work of the pipe ends may be performed after fixing the pipe receiver 621 to the rear upper plate 222. After the fitting work, the pipe ends are fixed to the pipe receiver 621.

Fig. 18 is a perspective view of the pipe retainer 620 including the pipe receiver 621 along with the unit pipe port 740.

The pipe retainer 620 preferably comprises the pipe receiver 621 mentioned above and three fixing plates 630a-630c. The first to sixth pipe ends 741a-741f may be fitted into the first to sixth pipe receiving surfaces 624a-624f, respectively. In this state, the three fixing plates 630a-630c are used to fix the positions of the pipe ends 741a-741f.

For instance, the first fixing plate 630a is fixed to the retainer front side 622 so as to sandwich the first and second pipe ends 741a, 741b with the first and second pipe receiving surfaces 624a, 624b. The first fixing plate 630a is fixed to the retainer front side 622 by applying a pair of rivets to the first pair of retainer rivet holes 628. The second fixing plate 630b is fixed to the retainer front side 622 so as to sandwich the third and fourth pipe ends 741c, 741d with the third and fourth pipe receiving surfaces 624c, 624d. The second fixing plate 630b is fixed to the retainer front side 622 by applying a pair of rivets to the second pair of retainer rivet holes 628. The third fixing plate 630c is fixed to the retainer front side 622 so as to sandwich the fifth and sixth pipe ends 741e, 741f with the fifth and sixth pipe receiving surfaces 624e, 624f. The third fixing plate 630c is fixed to the retainer front side 622 by applying a pair of rivets to the third pair of retainer rivet holes 628. The retainer screw holes 627 (see Figs. 15 and 17) are covered by the first and third fixing plates 630a, 630c.

As explained above, the positions of the retainer front side 622 and the retainer recessed part 626 may be coincided with the diameters of the pipe ends 741. Hence, each of the fixing plates 630 can be in contact with the surface of the corresponding pipe end when the fixing plate 630 is fixed to the pipe receiver 621. Each tunnel-shaped space defined by each pipe receiving surface 624 and the corresponding fixing plate 630 extends along the substantially vertical direction.

As a result, the positions of the pipe ends 741 are stabilized in the state where the centre axes of the pipe ends 741 are extending along a substantially vertical direction and included in the virtual plane 229 (see Fig. 16) parallel to the rear side plate 220.

The refrigerant pipes need to be covered with thick heat-isolation cover, and the outer diameters of the refrigerant pipes are generally greater than the outer diameters of the water pipes. Hence, even in such a case, the above configuration can facilitate the fixing work of the pipe ends 741 at predetermined positions where the axes of the pipe ends 741 are included in the same virtual plane 229.

Moreover, the fixing plates 630 are arranged for each of the pair of pipe ends which are in the same type. By this, it is possible to strike a balance between reduction of the number of parts and improvement of the workability. Each of the fixing plates 630a-630c may be a metal plate with U-shaped cross section to enhance the stiffness of the fixing plates 630.

After fixing the pipe ends 741 to the pipe retainer 620, the top plate 250 including the top rear plate 251 (see Figs. 1 and 11) is attached to the main frame 600.

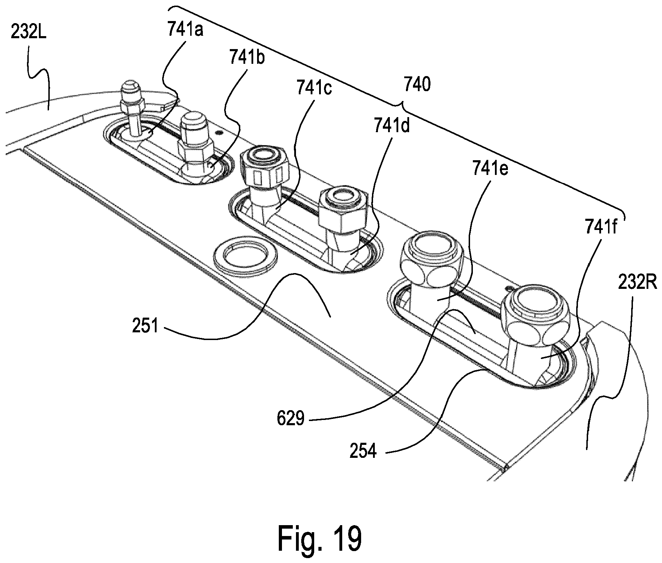

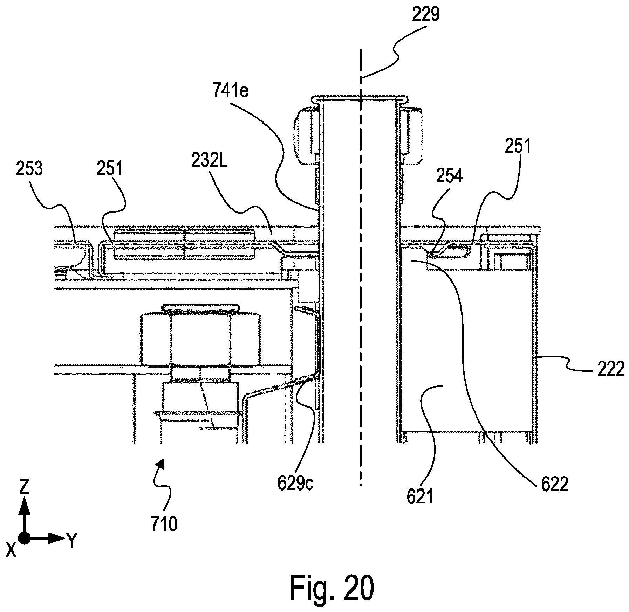

Fig. 19 is a perspective view of the top rear plate 251 and the peripheral part thereof. Fig. 20 is a cross sectional view of the top rear plate 251 and the peripheral part thereof when cut by a plane extending in parallel to the X-Y plane and passing the centre of the fifth pipe end 741e.

The top rear plate 251 is preferably configured to cover the pipe retainer 620 from above. The top rear plate 251 may be formed with three top plate apertures 254 respectively corresponding to the three retainer protruding parts 629 of the pipe retainer 620 (see Figs. 15 to 18). Each of the retainer protruding part 629 may be configured to be fitted into the corresponding top plate aperture 254. In other words, the pipe retainer 620 can be configured to fix the pipe ends 741 such that the pipe ends 741 protrude from the top plate 250.

The engagement of the retainer protruding parts 629 and the plate apertures 254 makes the accurate positioning of the pipe retainer 620 with respect to the housing 200 more certain, and therefore the accurate positioning of the pipe ends 741 is facilitated. Moreover, the top plate aperture 254 of the top plate 250 can double as an aperture for passing the pipe ends 741 and an aperture for engaging with the pipe retainer 620. Thus, the structure of the hot-water supply unit 100 is kept simple while achieving the accurate positioning of the pipe ends 741.

With the above configuration of the pipe retainer 620, the pipe ends 741 can be fixed at predetermined positions and directions with reference to the main frame 600 by the pipe retainer 620. The rear side plate 220 is also fixed to a predetermined position and direction with reference to the main frame 600. Thus, the pipe retainer 620 is configured to fix the pipe ends 741 at predetermined positions and directions with reference to the rear side plate 220 being attached to the main frame 600.

Moreover, the pipe retainer 620 is configured to fix the pipe ends 741 in positions adjacent to the rear side plate 220. Furthermore, the pipe retainer 620 is configured to fix the pipe ends 741 such that the axes of the pipe ends 741 are arranged along the rear side plate 220.

The pipes at the install destination are generally arranged along a substantially flat and vertical wall. The hot-water supply unit 100 is generally installed by positioning the rear side plate 220 which is substantially flat and vertical as a reference with respect to the wall. The pipe connection work is performed after the hot-water supply unit 100 has been installed to the install destination, and it is thus desirable for the hot-water supply unit 100 to be capable of being easily connected to the pipes arranged at the install destination. In this regard, the above configuration improves the workability of connecting pipes, particularly in the case where the axes of the pipes at the install destination are arranged along a substantially flat and vertical wall. As arranged on an opposite side, the user interface 213 can face a direction opposite to the direction of the building structure.

### Manufacturing Process of Hot-Water Supply Unit

One example of the manufacturing process of the hot-water supply unit 100 mentioned above is explained below.

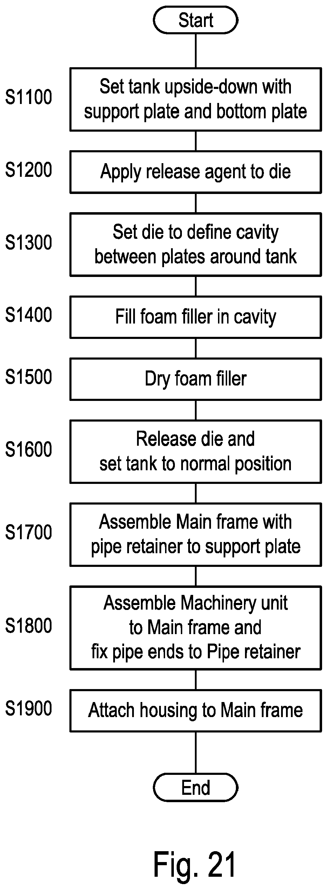

Fig. 21 is a flowchart of a manufacturing process of the hot-water supply unit 100.

At step S1100, the tank 300, the bottom plate 240 and the support plate 500 are prepared. Then, the tank 300 is set upside-down with the bottom plate 240 and the support plate 500. The bottom plate 240 and the support plate 500 are positioned at the positions in the use state with respect to the tank 300.

At step S1200, one or more of dies having an inner shape corresponding to the desired outer shape of the thermal insulator 400 are prepared. For instance, the dies 810 are configured to define a cross section of the thermal insulator 400 with respect to the principal axis 301 of the tank 300 such that the outline of the cross section has the above-mentioned four straight edges and four sub-edges (see Fig. 5). Then, a release agent is applied to the dies. This process may be executed before the step S1100.

At step S1300, the dies are set to define a cavity (a space) between the bottom plate 240 and the support plate 500 around the tank 300.

At step S1400, a foam filler is filled and foamed within the cavity.

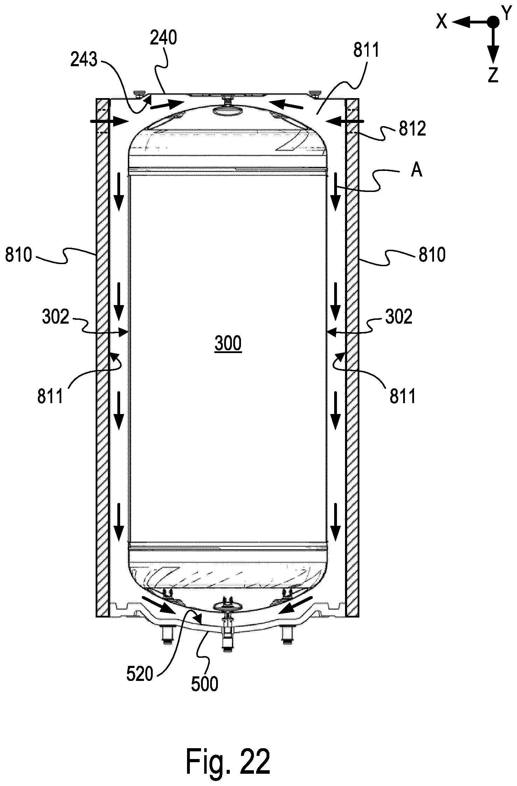

Fig. 22 is a schematic view showing the state of the process of the step S1400 of Fig. 21.

The cavity 811 is defined by the tank 300, the bottom plate 240, the support plate 500 and the dies 810 accommodating the tank 300. The inner surfaces of the dies (hereinafter referred to as "the die inner surfaces") 811 are coated with the release agent. The dies 810 are formed with a plurality of casting ports 812 for filling the foam filler into the cavity 811.

The foam filler goes in the directions indicated by the arrows A in the Fig. 22 while foaming to fill the cavity 811. Since the foam filler is in direct contact with the tank outer surface 302, the bottom inner surface 243 and the plate bottom surface 5, the foam filler adheres to the tank 300, the bottom plate 240, the support plate 500. Meanwhile, since the die inner surfaces 811 are coated with the release agent, the foam filler does not adhere to the dies 810.

Referring back to Fig. 21. At step S1500, the foam filler is dried to cure while being covered by the dies 810.

At step S1600, after the foam filler has been fully dried, the dies 810 are released. By this, the thermal insulator 400 adhering to the overall tank outer surface 301, and the bottom plate 240 is obtained. The tank 400 is set to a normal position in the use state along with the bottom plate 240, the support plate 500 and the thermal insulator 400. A casting surface is formed on the surface of the thermal insulator 400 from which the dies 810 are removed.

At step S1700, the main frame 600 with the pipe receiver 621 is assembled to the support plate 500. More specifically, as mentioned above, pipe receiver 621 is fixed to the rear upper plate 222 which is fixed to the main frame 600. The pipe receiver 621 may fixed to the main frame 600 before or after the main frame 600 being assembled to the support plate 500. Thus, the main frame 600 and the heating unit 700 are arranged on the support plate 500 that is fixed over the thermal insulator 400.

At step S1800, the machinery unit 700 is assembled to the main frame 600. The pipe ends 741 are fitted into the pipe receiving surfaces 624, respectively, and fixed to the pipe retainer 620 by fixing each of the fixing plates 630 to the pipe receiver 621. This process may be executed before the step S1700.

And, at step S1900, the parts of the housing 200 other than the rear upper plate 222 are attached to the main frame 600, i.e. to the unit main body 110. Thus, the hot-water supply unit 100 is assembled by fixing the four side plates 210, 220, 230R, 230L to only the bottom plate 240 and the main frame 600.

By this manufacturing process, the hot-water supply unit 100 in which the tank 300, the bottom plate 240 and the support plate 500 are integrated as a single unit by the thermal insulator 400 to which the main frame 600 supporting the machinery unit 700 is fixed. Thus, the hot-water supply unit 100 can be solid without depending on the four side plates 210, 220, 230R, 230L, even though the machinery unit 700 is positioned above the tank 300. Moreover, since it is avoided that the four side plates 210, 220, 230R, 230L adhere to the thermal insulator 400, the four side plates 210, 220, 230R, 230L can be made detachable.

### Advantageous Effect

As described above, the hot-water supply unit 100 according to the present embodiment has the configuration in which the housing 400 has at least one side plate which is fixed only to the main frame 600 among the thermal insulator 400 and the main frame 600. With this configuration, the thermal insulator 400 does not get damaged even if the side plate is detached. Thus, the housing 400, at least the above side plate, can be easily exchanged without lowering the performance of the hot-water supply unit 100 in the case where the housing 400 is damaged.

### Variations

The configuration of the hot-water supply unit according to the present embodiment explained above may be modified. Some examples of such modifications are mentioned below. The each of modification examples may be combined with one or more of the other modification examples.

The specific configuration of the heating mechanism is not limited to the above configuration. For instance, the heating mechanism may include a compressor, a pump or the like of the heat pump system.

The specific configuration of the tank is not limited to the above configuration. For instance, the tank may have a column shape, a cuboid shape and so forth.

The specific configuration of the housing is not limited to the above configuration. For instance, the front lower plate and the upper plate may be integrated as a single plate. The rear lower plate and the rear upper plate may be integrated as a single plate. The right hanging plate may be made of a material same as the right main plate, and integrated with the right main plate as a single unit. The same may be applied to the left hanging plate. A part of the housing, e.g. the top plate, may be omitted. Two or more of the four side plates may be integrated as a single unit. The housing may have a cylindrical shape, a shape with three flat side face and one curved face, and so on. The rear upper plate may be detachably attached to the main frame. In this case, the pipe retainer needs to be fixed to the main frame directly.

The specific configuration for detachably attaching the side plate to the main frame is not limited to the above configuration. For instance, side plate may be fixed to the main frame by other fixing means, such as screw fixing, magnetic fixing, side clamping, snap locking, or the like.

The specific configuration of the thermal insulator is not limited to the above configuration. For instance, the outline of the ring-shaped cross section of the thermal insulator may have two or three straight edges respectively facing to two different side plates among the four side plates. In this case, it is preferable that the two different side plates among the four side plates are opposite to each other. The thermal insulator does not necessarily need to be adhered to the bottom plate and/or the support plate if the unit main body is solid even without their adhesion.

The specific material of each part of the hot-water supply unit is not limited to the above material.

The specific configuration of the support plate is not limited to the above configuration. For instance, the support plate may be configured to be in contact with the housing only at two opposite plate side surfaces, or not be in contact with the housing. The support plate may have a flat shape instead of the convex and/or concave shape. The support plate may be made of a harder material and made thinner.

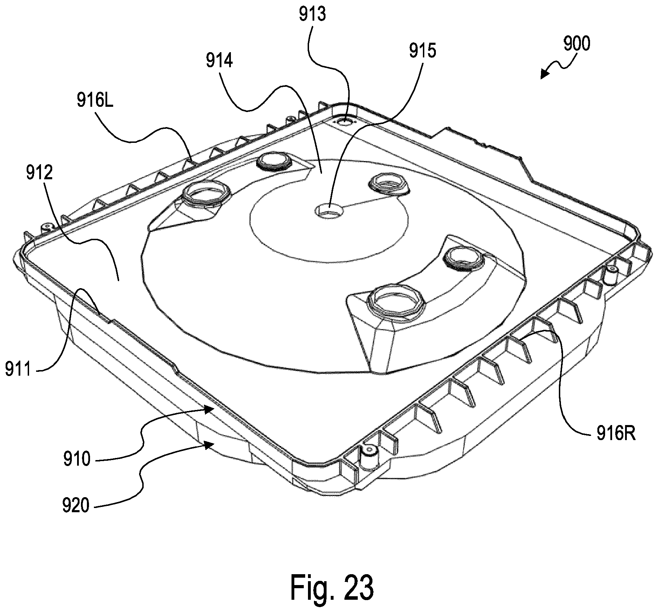

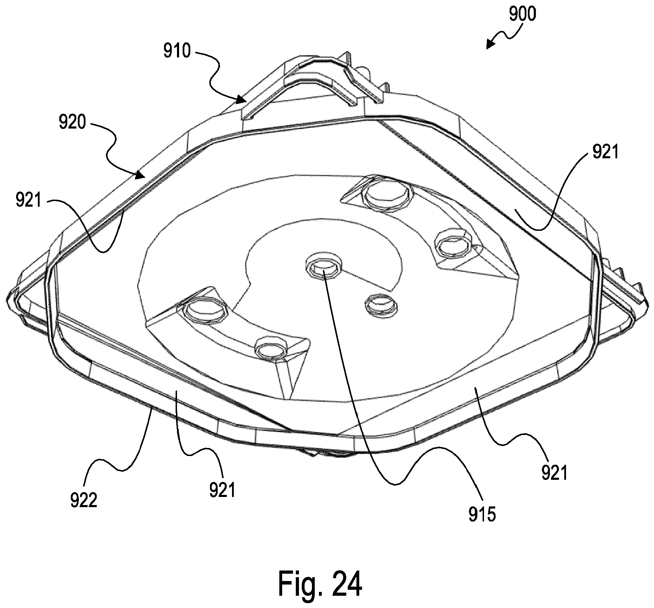

Fig. 23 is a top perspective view of a support plate as a variation of the support plate 500. Fig. 24 is a bottom perspective view of the support plate shown in Fig. 23.

The support plate 900 preferably includes an upper plate part 910 and a lower plate part 920. The centre of the upper plate part 910 and the centre of the lower plate part 920 may be substantially aligned with the principal axis 301 (see Figs.4 and 5).

The upper plate part 910 has substantially a rectangular-like shape extending in a horizontal plane. Each of the four main edges of the upper plate part 910 extends along the depth direction (i.e. the Y-axis direction) or the width direction (i.e. the X-axis direction). The lower plate part 920 has substantially a rectangular-like shape extending in a horizontal plane and with the four main corners chamfered. Each of the four main edges of the lower plate part 920 also extends along the depth direction or the width direction.

The upper plate part 910 is smaller than the lower plate part 920 in both length and width (in sizes in the depth direction and the width direction). Thus, the lower plate part 920 extends outward with respect to the upper plate part 910 in a horizontal plane. Each one of the four main corners of the upper plate part 910 may protrude from the corresponding chamfered corner part of the lower plate part 920 in a horizontal plane. Yet, each main corner of the upper plate part 910 is recessed with respect to any one of the extended lines of the four main edges of the lower plate part 920.

The upper plate part 910 may include a wall part 911 defining a drain receiving part 912 with a square-like shape therein. The upper plate part 910 may also include a drain discharge port 913 in the drain receiving part 912, for instance, at one of the four corners thereof. In this case, it is preferable that the surface of the drain receiving part 912 is slightly slanted downward towards the drain discharge port 513 with respect to a horizontal plane.

A plate convex part 914 which extends in parallel to the outer shape of the top part of tank 300 (see Fig. 4) may be formed in the middle of the drain receiving part 912. The upper plate part 910 is formed with plate apertures 915 corresponding to pipe ends of the tank pipe port 340 (see Fig. 6).

The upper plate part 910 may further include a right frame receiving part 916R disposed on the right side of and outside of the drain receiving part 912, and a left frame receiving part 916L disposed on the left side of and outside of the drain receiving part 912. Each of the right frame receiving part 916R and the left frame receiving part 916L may include a plurality of ribs with the same height. Each rib may be connected to both the wall part 911 and the upper surface of the lower plate part 920. Each of the right frame receiving part 916R and the left frame receiving part 916L may also include screw holes.

The lower plate part 920 may include four extending parts 921 extending outward with respect to the upper plate part 910 in a horizontal plane, and a reinforcing member 922 extending downward and edging the outline of the lower plate part 920. The lower plate part 920 may have a substantially octagon shape.

The support plate 900 is configured such that the four main edges of the lower plate part 920 are in contact with the inner surfaces of the four side plates of the housing 200, respectively.

The support plate 900 may be made of acrylonitrile-butadiene-styrene resin (ABS resin) or the like. It is preferable that a material having a good adherence property with the material of the thermal insulator 400 is used for the support plate 500.

The main frame 600 may be set onto and fixed to the support plate 900 by fixing bottom part of the right frame 610R and the bottom part of the left frame 610L to the right frame receiving part 916R and the left frame receiving part 916L, respectively, by screw fixing or the like.

With such support plate 900, the similar functions of the support plate 500 can be achieved with lower cost. Moreover, since the thickness can be reduced, the height of the hot-water supply unit 100 can be reduced.

The number of the pipes connected to the tank and the number of the pipe ends are not limited to the above stated numbers. The heating pipes for the space heating system or the water pipes for the hot-water supply system may be omitted.

The heating medium for transferring heat from the heat pump system to the water stored in the tank is not limited to water. The heating medium may be refrigerant. The heating medium can be directly used for the space heating system.

The fixed positions, orientations, and alignment sequence of the pipe ends which are achieved by the pipe retainer are not limited to the above stated positions, orientations, and alignment sequence. For instance, the pipe retainer may be configured to fix the pipe ends such that the circumferences of the pipe ends are in contact with a virtual plane parallel to the rear side plate on the same side of the virtual plane. This configuration is suitable for the pipes the circumferences of which are arranged along a substantially flat and vertical wall. The pipe ends of the refrigerant pipes may be arranged on right side of the pipe ends of the water pipes. The pipe retainer may be configured to arrange the pipe ends near the side plate other than the rear side plate in parallel to the side plate.

The specific configuration for fixing the pipe retainer at a predetermined position and direction with reference to the housing is not limited to the above configuration. For instance, the pipe retainer may be directly fixed to the main frame.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Thus, the foregoing descriptions of the embodiments according to the present invention are provided for illustration only.

### Reference List

- 100:: Hot-Water Supply Unit
- 110:: Unit Main Body
- 120:: Internal Unit
- 200:: Housing
- 201:: Housing Inner Surface
- 210:: Front Side Plate
- 211:: Front Lower Plate
- 212:: Front Upper Plate
- 220:: Rear Side Plate
- 221:: Rear Lower Plate
- 222:: Rear Upper Plate
- 223:: Upper concave handle
- 224:: Fixing Member
- 230R:: Right Side Plate
- 231R:: Right Main Plate
- 232R:: Right Hanging Plate
- 230L:: Left Side Plate
- 231L:: Left Main Plate
- 232L:: Left Hanging Plate
- 233:: Hook Part
- 234:: Hanging Base
- 235:: Engagement Part
- 240:: Bottom Plate
- 241:: Leg
- 242:: Lower concave handle
- 243:: Bottom Inner Surface
- 250:: Top Plate
- 251:: Top Rear Plate
- 252:: Top Front Plate
- 253:: Top Main Plate
- 300:: Tank
- 301:: Principal Axis
- 302:: Tank Outer Surface
- 310:: Tank Side Face
- 311:: Tank Drain Port
- 312:: Temperature Sensor
- 320:: Tank Bottom Face
- 330:: Tank Top Face
- 340:: Tank Pipe Port
- 400:: Thermal Insulator
- 401:: Insulator Inner Surface
- 402:: Insulator Outer Surface
- 410:: Insulator Bottom Part
- 420:: Insulator Top Part
- 430:: Insulator Side Part
- 500, 900:: Support Plate
- 510:: Plate Top Surface
- 511,911:: Wall Part
- 512, 914:: Plate Convex Part
- 513, 912:: Drain Receiving Part
- 514, 913:: Drain Discharge Port
- 515R, 916R:: Right Frame Receiving Part
- 515L, 916L:: Left Frame Receiving Part
- 520:: Plate Bottom Surface
- 521:: Bottom Flat Part
- 522:: Plate Concave Part
- 523:: Plate Recessed Part
- 530:: Plate Side Surface
- 540:: Plate Corner Part
- 550, 915:: Plate Aperture
- 560, 922:: Reinforcing Member
- 600:: Main Frame
- 610R:: Right Rectangular Frame
- 610L:: Left Rectangular Frame
- 612:: Hook Base
- 613:: Outer Wall Part
- 614:: Inner Wall Part
- 620:: Pipe Retainer
- 621:: Pipe Receiver
- 622:: Retainer Font Side
- 623:: Retainer Rear Side
- 624:: Pipe Receiving Surface
- 625:: Retainer Top Face
- 626:: Retainer Recessed Part
- 627:: Retainer Screw Hole
- 628:: Retainer Rivet Hole
- 629:: Retainer Protruding Part
- 630:: Fixing Plate
- 700:: Machinery Unit
- 710:: Heating Mechanism
- 720:: Piping
- 730:: Controller
- 740:: Unit Pipe Port
- 741:: Pipe End
- 810:: Die
- 812:: Casting Port
- 910:: Upper Plate Part
- 920:: Lower Plate Part
- 921:: Extending Part

## Claims

1. A hot-water supply unit (100), comprising:
a heating mechanism (710) configured to heat up heating medium;
a tank (300) configured to store water heated up by the heating medium;
at least one water pipe (720) connected with the tank, and configured to be a part of a water circuit for supplying water from the tank to a hot-water destination;
a thermal insulator (400) adhering to and substantially surrounding the tank;
a main frame (600) supporting the heating mechanism and the at least one water pipe to be at a position above the tank and the thermal insulator; and
a housing (200) accommodating the heating mechanism, the tank, the at least one water pipe, the thermal insulator and the main frame,
**characterized in that**
the housing has at least one side plate (210, 220, 230R, 230L) which is detachably attached to the main frame to be fixed only to the main frame among the thermal insulator and the main frame.

2. The hot-water supply unit (100) according to claim 1, wherein:
the side plate (210, 220, 230R, 230L) is detachably attached to the main frame (600) by means of hooking, screw fixing, magnetic fixing, side clamping, or snap locking.

3. The hot-water supply unit (100) according to claim 1 or 2, wherein
the main frame (600) defines at least one frame edge, the at least one side plate (210, 220, 230R, 230L) being hanged on the frame edge.

4. The hot-water supply unit (100) according to any one of claims 1 to 3, wherein:
the housing has at least a right side plate (230R) and a left side plate (230L) when the hot-water supply unit is in a use state thereof;
the main frame (600) includes
a right hook plate (611R) arranged on a top-right edge of the main frame and a left hook plate (611L) arranged on a top-left edge of the main frame, the right and left hook plates each comprising a hook base (612) which is an elongate plate having an outer end nearer to the side plate, and an outer wall part (613) which protrudes upward from the outer end of the hook base;
each of the right and left side plates includes
a main plate (231), and
a hanging plate (232) comprising a hanging base (234) which is an elongate plate fixed to the upper end of the main plate orthogonally to the main plate, and an engagement part (235) protruding downward from the hanging plate; and
the hanging plates of the right and left side plates engage with the right and left hook plates of the main frame, respectively.

5. The hot-water supply unit (100) according to any one of claims 1 to 4, wherein
the housing (200) further has a bottom plate (240) configured to support the thermal insulator (400) with respect to an installation surface on which the hot-water supply unit is installed.

6. The hot-water supply unit (100) according to any one of claims 1 to 5, further comprising
a support plate (500, 900) which is accommodated by the housing (200) and disposed between the thermal insulator (400) and the main frame (600) to support the main frame with respect to the thermal insulator.

7. The hot-water supply unit (100) according to claim 5 or 6 with the bottom plate (240), wherein:
the at least one side plate (210, 220, 230R, 230L) is further detachably attached to the bottom plate to be fixed to the bottom plate.

8. The hot-water supply unit (100) according to claim 7, wherein:
the bottom plate (240) has a rectangular-like shape; and
the housing (200) has a right prism form with four side plates (210, 220, 230R, 230L) which are fixed only to the bottom plate and the main frame (600) among the bottom plate, the tank (300), the thermal insulator (400), the support plate (500, 900) and the main frame.

9. The hot-water supply unit (100) according to any one of claims 1 to 8, wherein:
the thermal insulator (400) has a casting surface at least in an area closest to the at least one side plate (210, 220, 230R, 230L).

10. The hot-water supply unit (100) according to any one of claims 5 to 9 with the bottom plate (240) and the support plate (500, 900), wherein:
the thermal insulator (400) is made of a foam filler and adhered to the tank (300), the bottom plate and the support plate by foaming process of the foam filler.

11. The hot-water supply unit (100) according to any one of claims 1 to 10, wherein:
the tank (300) has a side face forming a cylindrical shape, a bottom face and a top face closing the cylindrical shape formed by the side face.

12. The hot-water supply unit (100) according to claim 11, wherein:
the thermal insulator (400) has a ring-shaped cross section with respect to a principal axis of the tank (300), the outline of the ring-shaped cross section having at least two straight edges respectively facing to two different side plates (210, 220, 230R, 230L) of the housing (200).

13. The hot-water supply unit (100) according to claim 12 with the four side plates (210, 220, 230R, 230L), wherein
the outline of the ring-shaped cross section of the thermal insulator (400) has a shape such that four corner spaces (121) are formed between the inner surface of the housing (200) and the outer surface of the thermal insulator at each corner of the housing, and that each corner space is formed from the bottom plate (240) till the support plate (500, 900).

14. A method for manufacturing a hot-water supply unit (100) according to any one of claims 1 to 13, comprising:
coating (S1200) an inner surface of the at least one die with a release agent;
defining (S1300) a space by at least the tank and at least one die accommodating the tank;
filling and foaming (S1400) a foam filler within the space;
drying (S1500) the foamed foam filler and obtaining the thermal insulator adhering to the outer surface of the tank;
removing (S1600) the at least one die from the obtained thermal insulator; and
detachably attaching the at least one side plate (210, 220, 230R, 240L) to the main frame (600) thereby fixing the at least one side plate only to the main frame (600) among the thermal insulator (400) and the main frame (600).

15. The method according to claim 14 for manufacturing the hot-water supply unit (100) which has the bottom plate (240) and the support plate (500, 900) and in which the thermal insulator is adhering to the outer surface of the tank (300), the bottom plate and the support plate (500, 900), wherein
the space is defined by the tank, the bottom plate, the at least one die, and the support plate.

16. The method according to claim 15, wherein:
the bottom plate (240) has a rectangular-like shape; and
the housing (200) has a right prism form with four side plates (210, 220, 230R, 230L) which are fixed only to the bottom plate and the main frame (600) among the bottom plate, the tank (300), the thermal insulator (400), the support plate (500, 900) and the main frame.

17. The method according to claim 16, further comprising:
arranging (S1700, S1800) the main frame (600), the heating mechanism (710), and the at least one water pipe (720) on the support plate (500, 900) that is fixed to the thermal insulator (400); and
assembling (S1900) the hot-water supply unit (100) by fixing the four side plates (210, 220, 230R, 230L) only to the bottom plate (240) and the main frame among the bottom plate, the tank (300), the thermal insulator, the support plate and the main frame.

## Patentansprüche

1. Warmwasserversorgungseinheit (100), die aufweist:
einen Heizmechanismus (710), der konfiguriert ist, ein Heizmedium zu erhitzen;
einen Tank (300), der konfiguriert ist, durch das Heizmedium erhitzte Wasser zu speichern;
mindestens eine Wasserleitung (720), die mit dem Tank verbunden ist und so konfiguriert ist, dass sie Teil eines Wasserkreislaufs zur Lieferung von Wasser aus dem Tank zu einem Warmwasserziel ist;
einen Wärmeisolator (400), der am Tank haftet und diesen im Wesentlichen umgibt;
einen Hauptrahmen (600), der den Heizmechanismus und die mindestens eine Wasserleitung in einer Position oberhalb des Tanks und des Wärmeisolators hält; und
ein Gehäuse (200), das den Heizmechanismus, den Tank, die mindestens eine Wasserleitung, den Wärmeisolator und den Hauptrahmen aufnimmt,
**dadurch gekennzeichnet, dass**
das Gehäuse mindestens eine Seitenplatte (210, 220, 230R, 230L) aufweist, die abnehmbar am Hauptrahmen angebracht ist, so dass sie unter dem Wärmeisolator und dem Hauptrahmen nur am Hauptrahmen befestigt ist.

2. Warmwasserversorgungseinheit (100) nach Anspruch 1, wobei:
die Seitenplatte (210, 220, 230R, 230L) am Hauptrahmen (600) durch Einhaken, Verschrauben, magnetische Befestigung, seitliche Klemmung oder Schnappverschluss lösbar befestigt ist.

3. Warmwasserversorgungseinheit (100) nach Anspruch 1 oder 2, wobei
der Hauptrahmen (600) mindestens eine Rahmenkante definiert, wobei die mindestens eine Seitenplatte (210, 220, 230R, 230L) an der Rahmenkante eingehängt ist.

4. Warmwasserversorgungseinheit (100) nach einem der Ansprüche 1 bis 3, wobei:
das Gehäuse mindestens eine rechte Seitenplatte (230R) und eine linke Seitenplatte (230L) aufweist, wenn sich die Warmwasserversorgungseinheit in einem Gebrauchszustand derselben befindet;
der Hauptrahmen (600) aufweist:
eine rechte Hakenplatte (611R), die an einer oberen rechten Kante des Hauptrahmens angeordnet ist, und eine linke Hakenplatte (611L), die an einer oberen linken Kante des Hauptrahmens angeordnet ist, wobei die rechte und die linke Hakenplatte jeweils eine Hakenbasis (612), die eine längliche Platte ist, die ein äußeres Ende näher an der Seitenplatte aufweist, und einen Außenwandteil (613) aufweisen, der von dem äußeren Ende der Hakenbasis nach oben vorsteht;
jede der rechten und linken Seitenplatten aufweist:
eine Hauptplatte (231), und
eine Aufhängungsplatte (232), die eine Aufhängungsbasis (234) aufweist, die eine längliche Platte ist, die am oberen Ende der Hauptplatte orthogonal zur Hauptplatte befestigt ist, und ein Eingriffsteil (235), das von der Aufhängungsplatte nach unten vorsteht; und
die Aufhängungsplatten der rechten und linken Seitenplatten mit den rechten bzw. linken Hakenplatten des Hauptrahmens in Eingriff kommen.

5. Warmwasserversorgungseinheit (100) nach einem der Ansprüche 1 bis 4, wobei
das Gehäuse (200) ferner eine Bodenplatte (240) aufweist, die so konfiguriert ist, dass sie den Wärmeisolator (400) in Bezug auf eine Installationsfläche trägt, auf der die Warmwasserversorgungseinheit installiert ist.

6. Warmwasserversorgungseinheit (100) nach einem der Ansprüche 1 bis 5, die ferner aufweist:
eine Stützplatte (500, 900), die von dem Gehäuse (200) aufgenommen wird und zwischen dem Wärmeisolator (400) und dem Hauptrahmen (600) angeordnet ist, um den Hauptrahmen in Bezug auf den Wärmeisolator zu stützen.

7. Warmwasserversorgungseinheit (100) nach Anspruch 5 oder 6 mit der Bodenplatte (240), wobei:
die mindestens eine Seitenplatte (210, 220, 230R, 230L) ferner lösbar an der Bodenplatte angebracht ist, um an der Bodenplatte befestigt zu werden.

8. Warmwasserversorgungseinheit (100) nach Anspruch 7, wobei:
die Bodenplatte (240) eine rechteckige Form aufweist; und das Gehäuse (200) eine rechteckige Prismenform mit vier Seitenplatten (210, 220, 230R, 230L) aufweist, die unter der Bodenplatte, dem Tank (300), dem Wärmeisolator (400), der Stützplatte (500, 900) und dem Hauptrahmen nur an der Bodenplatte und am Hauptrahmen (600) befestigt sind.

9. Warmwasserversorgungseinheit (100) nach einem der Ansprüche 1 bis 8, wobei:
der Wärmeisolator (400) mindestens in einem Bereich, der der mindestens einen Seitenplatte (210, 220, 230R, 230L) am nächsten liegt, eine Gussoberfläche aufweist.

10. Warmwasserversorgungseinheit (100) nach einem der Ansprüche 5 bis 9 mit der Bodenplatte (240) und der Stützplatte (500, 900), wobei:
der Wärmeisolator (400) aus einem Schaumfüllstoff besteht und durch Aufschäumen des Schaumfüllstoffs mit dem Tank (300), der Bodenplatte und der Stützplatte verklebt ist.

11. Warmwasserversorgungseinheit (100) nach einem der Ansprüche 1 bis 10, wobei:
der Behälter (300) eine Seitenfläche, die eine zylindrische Form bildet, eine Bodenfläche und eine obere Fläche aufweist, die die von der Seitenfläche gebildete zylindrische Form abschließt.

12. Warmwasserversorgungseinheit (100) nach Anspruch 11, wobei:
der Wärmeisolator (400) einen ringförmigen Querschnitt in Bezug auf eine Hauptachse des Tanks (300) aufweist, wobei der Umriss des ringförmigen Querschnitts mindestens zwei gerade Kanten aufweist, die jeweils zwei verschiedenen Seitenplatten (210, 220, 230R, 230L) des Gehäuses (200) gegenüberliegen.

13. Warmwasserversorgungseinheit (100) nach Anspruch 12 mit den vier Seitenplatten (210, 220, 230R, 230L), wobei der Umriss des ringförmigen Querschnitts des Wärmeisolators (400) eine solche Form hat, dass zwischen der Innenfläche des Gehäuses (200) und der Außenfläche des Wärmeisolators an jeder Ecke des Gehäuses vier Eckenräume (121) ausgebildet sind, und dass jeder Eckenraum von der Bodenplatte (240) bis zur Stützplatte (500, 900) ausgebildet ist.

14. Verfahren zum Herstellen einer Warmwasserversorgungseinheit (100) nach einem der Ansprüche 1 bis 13, das aufweist:
Beschichten (S1200) einer Innenfläche des mindestens einen Formwerkzeugs mit einem Trennmittel;
Definieren (S1300) eines Raums durch mindestens den Tank und mindestens ein Formwerkzeug, das den Tank aufnimmt;
Füllen und Aufschäumen (S1400) eines Schaumfüllstoffs im Raum;
Trocknen (S1500) des geschäumten Schaumfüllstoffs und Erhalten des an der Außenfläche des Tanks haftenden Wärmeisolators;
Entfernen (S1600) des mindestens einen Formwerkzeugs vom erhaltenen Wärmeisolator; und
lösbares Befestigen der mindestens einen Seitenplatte (210, 220, 230R, 240L) am Hauptrahmen (600), wodurch die mindestens eine Seitenplatte unter dem Wärmeisolator (400) und dem Hauptrahmen (600) nur am Hauptrahmen (600) zwischen befestigt wird.

15. Verfahren nach Anspruch 14 zum Herstellen der Warmwasserversorgungseinheit (100), die die Bodenplatte (240) und die Stützplatte (500, 900) aufweist und wobei der Wärmeisolator an der Außenfläche des Tanks (300), der Bodenplatte und der Stützplatte (500, 900) haftet, wobei der Raum durch den Tank, die Bodenplatte, das mindestens eine Formwerkzeug und die Stützplatte definiert wird.

16. Verfahren nach Anspruch 15, wobei:
die Bodenplatte (240) eine rechteckige Form aufweist; und das Gehäuse (200) eine rechteckige Prismenform mit vier Seitenplatten (210, 220, 230R, 230L) aufweist, die unter der Bodenplatte, dem Tank (300), dem Wärmeisolator (400), der Stützplatte (500, 900) und dem Hauptrahmen nur an der Bodenplatte und am Hauptrahmen (600) befestigt sind.

17. Verfahren nach Anspruch 16, das ferner folgendes aufweist:
Anordnen (S1700, S1800) des Hauptrahmens (600), des Heizmechanismus (710) und der mindestens einen Wasserleitung (720) auf der Stützplatte (500, 900), die an dem Wärmeisolator (400) befestigt ist; und
Montieren (S1900) der Warmwasserversorgungseinheit (100) durch Befestigen der vier Seitenplatten (210, 220, 230R, 230L) unter der Bodenplatte, dem Tank (300), dem Wärmeisolator, der Stützplatte und dem Hauptrahmen nur an der Bodenplatte (240) und am Hauptrahmen.

## Revendications

1. Unité d'alimentation en eau chaude (100), comprenant :
un mécanisme de chauffage (710) prévu pour chauffer un fluide caloporteur ;
un réservoir (300) prévu pour stocker de l'eau chauffée par le fluide caloporteur ;
au moins une conduite d'eau (720) reliée au réservoir, et prévue pour faire partie d'un circuit d'eau destiné à refouler de l'eau du réservoir vers une destination d'eau chaude ;
un isolant thermique (400) adhérant au réservoir et entourant sensiblement celui-ci ;
un cadre principal (600) supportant le mécanisme de chauffage et ladite au moins une conduite d'eau de manière à être à un emplacement situé au-dessus du réservoir et de l'isolant thermique ; et
un enceinte (200) recevant le mécanisme de chauffage, le réservoir, ladite au moins une conduite d'eau, l'isolant thermique et le cadre principal,
**caractérisée en ce que**
l'enceinte présente au moins une plaque latérale (210, 220, 230R, 230L) raccordée de manière amovible au cadre principal de manière à n'être fixée qu'au cadre principal, entre l'isolant thermique et le cadre principal.

2. Unité d'alimentation en eau chaude (100) selon la revendication 1, où :
la plaque latérale (210, 220, 230R, 230L) est raccordée de manière amovible au cadre principal (600) par accrochage, vissage, fixation magnétique, serrage latéral ou verrouillage par encliquetage.

3. Unité d'alimentation en eau chaude (100) selon la revendication 1 ou 2, où
le cadre principal (600) définit au moins un bord de cadre, ladite au moins une plaque latérale (210, 220, 230R, 230L) étant accrochée sur le bord de cadre.

4. Unité d'alimentation en eau chaude (100) selon l'une des revendications 1 à 3, où :
l'enceinte présente au moins une plaque latérale droite (230R) et une plaque latérale gauche (230L) lorsque l'unité d'alimentation en eau chaude est en état d'utilisation ;
le cadre principal (600) comprend
une plaque d'accrochage droite (611R) disposée sur un bord de sommet droit du cadre principal et une plaque d'accrochage gauche (611L) disposée sur un bord de sommet gauche du cadre principal, les plaques d'accrochage droite et gauche comprenant chacune une base d'accrochage (612), laquelle est une plaque allongée dont une extrémité extérieure est proche de la plaque latérale, et une partie de paroi extérieure (613) qui se dresse vers le haut depuis l'extrémité extérieure de la base d'accrochage ;
les plaques latérale droite et gauche comprennent chacune une plaque principale (231), et
une plaque de suspension (232) comprenant une base de suspension (234), laquelle est une plaque allongée fixée à l'extrémité supérieure de la plaque principale orthogonalement à la plaque principale, et une partie d'engagement (235) faisant saillie vers le bas depuis la plaque de suspension ; et
les plaques de suspension des plaques latérales droite et gauche s'enclenchent respectivement avec les plaques d'accrochage gauche et droite du cadre principal.

5. Unité d'alimentation en eau chaude (100) selon l'une des revendications 1 à 4, où
l'enceinte (200) présente en outre une plaque de fond (240) prévue pour supporter l'isolant thermique (400) par rapport à une surface d'installation surface sur laquelle est installée l'unité d'alimentation en eau chaude.

6. Unité d'alimentation en eau chaude (100) selon l'une des revendications 1 à 5, comprenant en outre une plaque de support (500, 900) reçue dans l'enceinte (200) et disposée entre l'isolant thermique (400) et le cadre principal (600) pour supporter le cadre principal par rapport à l'isolant thermique.

7. Unité d'alimentation en eau chaude (100) selon la revendication 5 ou 6 avec la plaque de fond (240), où :
ladite au moins une plaque latérale (210, 220, 230R, 230L) est en outre raccordée de manière amovible à la plaque de fond de manière à être fixée à la plaque de fond.

8. Unité d'alimentation en eau chaude (100) selon la revendication 7, où :
la plaque de fond (240) est de forme rectangulaire ; et
l'enceinte (200) est en forme de prisme droit à quatre plaques latérales (210, 220, 230R, 230L) qui ne sont fixées qu'à la plaque de fond et au cadre principal (600), entre la plaque de fond, le réservoir (300), l'isolant thermique (400), la plaque de support (500, 900) et le cadre principal.

9. Unité d'alimentation en eau chaude (100) selon l'une des revendications 1 à 8, où :
l'isolant thermique (400) a une surface de coulée au moins dans une zone proche de ladite au moins une plaque latérale (210, 220, 230R, 230L).

10. Unité d'alimentation en eau chaude (100) selon l'une des revendications 5 à 9 avec la plaque de fond (240) et la plaque de support (500, 900), où :
l'isolant thermique (400) est réalisé par une coulée de mousse et adhère au réservoir (300), à la plaque de fond et à la plaque de support par processus d'expansion de la coulée de mousse.

11. Unité d'alimentation en eau chaude (100) selon l'une des revendications 1 à 10, où :
le réservoir (300) présente une face latérale de forme cylindrique, une face de fond et une face de sommet fermant la forme cylindrique réalisée par la face latérale.

12. Unité d'alimentation en eau chaude (100) selon la revendication 11, où :
l'isolant thermique (400) présente une section transversale de forme annulaire par rapport à un axe principal du réservoir (300), le contour de ladite section transversale de forme annulaire ayant au moins deux bord rectilignes opposés respectivement à deux plaques latérales (210, 220, 230R, 230L) différentes de l'enceinte (200).

13. Unité d'alimentation en eau chaude (100) selon la revendication 12 avec les quatre plaques latérales (210, 220, 230R, 230L), où
le contour de la section transversale de forme annulaire de l'isolant thermique (400) a une forme telle que quatre espaces de coin (121) sont formés entre la surface intérieure de l'enceinte (200) et la surface extérieure de l'isolant thermique dans chaque coin de l'enceinte, et que chaque espace de coin est formé depuis la plaque de fond (240) jusqu'à la plaque de support (500, 900).

14. Procédé de fabrication d'une unité d'alimentation en eau chaude (100) selon l'une des revendications 1 à 13, comprenant :
le revêtement (S1200) d'une surface intérieure dudit au moins un moule avec un agent de démoulage ;
la définition (S1300) d'un espace par au moins le réservoir et au moins un moule recevant le réservoir ;
la coulée et l'expansion (S1400) d'une charge de mousse à l'intérieur de l'espace ;
le séchage (S1500) de la charge de mousse expansée et l'obtention de l'isolant thermique adhérant à la surface extérieure du réservoir ;
le retrait (S1600) dudit au moins un moule de l'isolant thermique obtenu ; et
le raccordement amovible de ladite au moins une plaque latérale (210, 220, 230R, 240L) au cadre principal (600) en ne fixant ainsi ladite au moins une plaque latérale qu'au cadre principal (600), entre l'isolant thermique (400) et le cadre principal (600).

15. Procédé selon la revendication 14 pour la fabrication de l'unité d'alimentation en eau chaude (100) comportant la plaque de fond (240) et la plaque de support (500, 900) et où l'isolant thermique adhère à la surface extérieure du réservoir (300), à la plaque de fond et à la plaque de support (500, 900), où
l'espace est défini par le réservoir, la plaque de fond, ledit au moins un moule, et la plaque de support.

16. Procédé selon la revendication 15, où :
la plaque de fond (240) est de forme rectangulaire ; et
l'enceinte (200) est en forme de prisme droit à quatre plaques latérales (210, 220, 230R, 230L) qui ne sont fixées qu'à la plaque de fond et au cadre principal (600), entre la plaque de fond, le réservoir (300), l'isolant thermique (400), la plaque de support (500, 900) et le cadre principal.

17. Procédé selon la revendication 16, comprenant en outre :
la disposition (S1700, S1800) du cadre principal (600), du mécanisme de chauffage (710) et de ladite au moins une conduite d'eau (720) sur la plaque de support (500, 900) raccordée à l'isolant thermique (400) ; et
l'assemblage (S1900) de l'unité d'alimentation en eau chaude (100) par fixation des quatre plaques latérales (210, 220, 230R, 230L) seulement à la plaque de fond (240) et au cadre principal, entre la plaque de fond, le réservoir (300), l'isolant thermique, la plaque de support et le cadre principal.
